# EUROPEAN PATENT SPECIFICATION

(11) **EP 4 184 732 B1**
(45) Date of publication and mention of the grant of the patent: **26.03.2025**
(21) Application number: 21209632.5
(22) Date of filing: 22.11.2021
(51) Int. Cl.: H02B 1/20, H02B 1/32

(54) **POWER SUPPLY MODULE**
STROMVERSORGUNGSMODUL
MODULE D'ALIMENTATION ÉLECTRIQUE

(43) Date of publication of application: 24.05.2023
(73) Proprietor: Wöhner Besitz GmbH, 96472 Rödental (DE)
(72) Inventor: STEINBERGER, Philipp, 96450 Coburg (DE); MASEL, Joram, 96328 Küps (DE); HÖFNER, Florian, 96472 Rödental (DE)
(74) Representative: Bratovic, Nino Maria

(56) References cited:
- EP-A1- 0 047 915
- EP-A1- 1 351 336
- WO-A1-2017/198484
- GB-A- 2 344 001
- US-A- 5 144 530

## Description

The invention relates to a power supply module for providing a rear-side power supply of a power distribution busbar system which can be mounted in a control cabinet.

A control cabinet can comprise a power distribution system to distribute electrical power among electrical devices mounted in the control cabinet. Control cabinets can be used to accommodate switch gear and switching elements, such as contactors, fuse elements or display units which can for example indicated the operating states of downstream power-consuming entities. A control cabinet can comprise a power distribution busbar system comprising busbars for distribution of electrical power between different busbar components of the control cabinet. These busbar components comprise for instance motor starter, switch disconnectors or circuit breakers. The internal power distribution busbar system of the control cabinet can be connected to external conductors to receive electrical power supply from a power supply network. During assembly of busbar components to the busbars of the power distribution busbar system, safety requirements to provide safety for a user have to be fulfilled.

In a conventional control cabinet the power feed-in of electrical supply power is performed by means of a power supply module placed on a front side of the busbar. This has the disadvantage that the space required for this front side power supply module is lost for other busbar components.

Examples of known power supply modules for busbar systems are disclosed in US5144530A, EP1351336A1, GB2344001A, EP0047915A1 and WO2017/198484A1.

Accordingly it is an object of the present invention to provide a power supply module which does makes a more efficient use of the available space within a control cabinet.

It is a further object of the present invention to provide a power supply module which can be easily installed in a control cabinet and which provides safety for a user when handling busbar components of the control cabinet.

These objects are achieved by a power supply module comprising the features of claim 1.

A significant advantage of the power supply module according to the first aspect of the present invention is that by the special power supply feed-in of electrical power from behind the busbars the space on the front side of the busbars can be fully used to place other busbar components on the power distribution busbar system and to make in this way a very efficient use of the available mounting space within the control cabinet.

A further advantage of the power supply module according to the first aspect of the present invention is that it can be mounted onto the power distribution busbar system without a tool.

A still further advantage is that the mechanical fixation of the power supply module to the busbars and an electrical contacting of the busbars takes place simultaneously.

In a possible embodiment the rear side power supply module comprises
a first clamping block having a number of clamping contacts adapted to clamp electrical conductors to said first clamping block,
a second clamping block having a number of clamping contacts adapted to clamp electrical conductors to said second clamping block,
a number of intermediate bars provided between said first clamping block and said second clamping block to provide electrical connection between the electrical conductors clamped to the first clamping block and the electrical clamping contacts of the second clamping block and
a number of touch-protected electrical contacts provided at a front side of said power supply module and adapted to establish an electrical connection between the busbars of the power distribution busbar system and the intermediate bars of said power supply module.

The provision of two clamping blocks at opposite sides of the rear side power supply module has the advantage that a chain of serially connected power supply modules can be formed including a number of power supply modules which are adapted to provide electrical power supply to a corresponding number of power supply busbar sets or busbar boards.

This facilitates also a flexible adaption of the size of the power distribution system for the respective use case.

The power supply module according to the first aspect of the present invention provides the advantage that busbar components of the power distribution busbar system can also be mounted on the front side of the power supply module thus making efficient use of the available space within the control cabinet.

Further, an advantage of the power supply module is that it provides touch protection for a user performing maintenance or repair services at the control cabinet.

A still further advantage of the power supply module according to the first aspect of the present invention resides in that the mounting of busbar components on the power distribution busbar system can be easily performed by a user from a front side of the control cabinet without interference with the continuous power supply of the power distribution busbar system through the power supply module according to the first aspect of the present invention.

In a possible embodiment of the power supply module according to the first aspect of the present invention, the touch protected electrical contacts of the power supply module comprise electrical lyre or U shaped contacts each having a base contact portion connecting two opposing leg contact portions of the respective electrical lyre or U shaped contact with each other.

In a further possible embodiment of the power supply module according to the first aspect of the present invention, the base contact portion of the electrical lyre or U shaped contact is electrically connected to an associated intermediate bar of said power supply module.

In a further possible embodiment of the power supply module according to the first aspect of the present invention, the two leg contact portions of the electrical lyre or U shaped contact are touch protected by electrically isolating cover portions of the housing front side to provide finger-safe (IP20) touch protection of the leg contact portions of the electrical lyre or U shaped contact, wherein the housing front side is further adapted to cover the associated intermediate bar lying beneath the housing front side.

In a still further possible embodiment of the power supply module according to the first aspect of the present invention, the two leg contact portions of an electrical lyre or U shaped contact can comprise electrical contact surfaces facing each other, wherein the remaining surface of each leg contact portion is coated with an electrically isolating material to provide finger-safe (IP20) touch protection of the leg contact portions of the electrical lyre or U shaped contact.

In a still further possible embodiment of the power supply module according to the first aspect of the present invention, a portion of a busbar of the power distribution busbar system is pluggable between the electrical contact surfaces of the two leg contact portions of the electrical lyre or U shaped contact to establish an electrical connection between the busbar of the power distribution busbar system and an intermediate bar of said power supply module through said electrical lyre or U shaped contact.

In a still further possible embodiment of the power supply module according to the first aspect of the present invention, the two leg contact portions of the electrical lyre or U shaped contact facing each other and encompassing a portion of a busbar of said power distribution busbar system are attracted to each other in response to an electrical overcurrent flowing through the electrical lyre or U shaped contact and are pressed against the encompassed portion of the busbar to prevent a separation of the busbar from the electrical lyre or U shaped contact of the power supply module and/or to prevent an electrical arc.

Accordingly, the electrical lyre or U shaped contact being pressed in reaction to an electrical overcurrent like a short circuit current against the encompassed portion of the busbar prevents a lift-off of the busbar and also prevents an electrical arc during an overcurrent event thus increasing operation safety of the power distribution busbar system of the control cabinet.

The lyre shape of the electrical contact leads to a self-amplifying effect during an overcurrent event.

In a still further possible embodiment of the power supply module according to the first aspect of the present invention, the busbar of the power distribution system has a U-shaped profile with two opposing busbar sidewalls connected by a busbar base portion of the busbar.

In a still further possible embodiment of the power supply module according to the first aspect of the present invention, a sidewall of said U-shaped busbar is pluggable between the electrical contact surfaces of the two leg contact portions of the respective electrical lyre or U shaped contact to establish an electrical connection between the U-shaped busbar and the intermediate bar through the electrical lyre or U shaped contact.

In a further possible embodiment of the power supply module according to the first aspect of the present invention, the busbar base portion of the U-shaped busbar of said power distribution busbar system does comprise contact slots adapted to receive protruding electrical contacts of busbar components pluggable into the contact slots of the busbar base portion of said U-shaped busbar.

In a further possible embodiment of the power supply module according to the first aspect of the present invention, the first clamping block and the second clamping block of the power supply module are both touch-protected by associated removable or moveable touch protection cover elements.

In a still further possible embodiment of the power supply module according to the first aspect of the present invention, the removable touch protection cover element of a clamping block is secured by a sealing element or by a lock element against unintentional removal of the touch protection cover element by a user.

In a still further possible embodiment of the power supply module according to the first aspect of the present invention, the clamping contacts of a clamping block comprise prism clamps.

In a further possible embodiment of the power supply module according to the first aspect of the present invention, the clamping contacts of a clamping block comprise box terminal clamps.

In a further possible embodiment of the power supply module according to the first aspect of the present invention, the clamping contacts of the second clamping block of said power supply module provide a loop-through functionality to loop the electrical conductors clamped to the clamping contacts of the first clamping block of said power supply module via intermediate conductors to clamping contacts of a clamping block of an extension power supply module provided for rear-side power supply of further busbars of said power distribution system.

In a possible embodiment the rear side power supply module comprises a single clamping block used for power supply of an associated set of busbars comprising a number, N, of busbars connected to the front-side touch protected contact of the rear side power supply module.

In a further possible embodiment the rear side power supply comprises two clamping blocks provided on opposite sides of the power supply module and electrically connected to each other via the electrically conductive and touch protected intermediated bars.

In this embodiment several rear side power supply can be serially connected to each other to form a chain of rear side power supply modules each being provided for the power supply of an associated set of busbars mounted to the respective power supply module.

In a further possible embodiment of the power supply module according to the first aspect of the present invention, a busbar board with integrated busbars of the power distribution system is mounted on the power supply module and on an associated auxiliary support module used to provide mechanical support to the mounted busbar board and to provide mechanical tolerance compensation for manufactured screw holes of the power supply module and of its associated auxiliary support module.

In a further possible embodiment of the power supply module according to the first aspect of the present invention, the power supply module, associated extension power supply modules and associated auxiliary support modules are mounted on a mounting platform of a control cabinet.

In a further possible embodiment of the power supply module according to the first aspect of the present invention, the mounting platform of the control cabinet comprises a mounting plate to which the power supply module, the associated extension power supply modules and the auxiliary support modules are fixed.

In a further possible embodiment of the power supply module according to the first aspect of the present invention, the mounting platform of the control cabinet comprises a frame mounted bar system having supporting bars to which a busbar board is fixed by means of corresponding brackets, wherein the power supply module is pluggable into a rear side of the busbar board. According to the invention, the busbars of the power distribution busbar system are integrated in a housing of a touch-protected busbar board.

In a possible embodiment of the power supply module according to the present invention a locking part of the power supply module, of the associated extension power supply module and of the associated auxiliary modules used for a tool-free assembly of the touch-protected busbar board on the respective module is after removal of a touch protection cover element accessible by a tool, in particular by a screw driver, used for disengaging the engaged locking part integrated within the respective modules or provided on the rear side of the housing of the touch-protected busbar board from the assembly element for removal of the touch-protected busbar board from the respective modules in a Z-direction .

In a still further possible embodiment of the power supply module according to the first aspect of the present invention, the locking part of the power supply module, of the associated extension power supply module and of the associated auxiliary modules used for a tool-free assembly of the touch-protected busbar board on the respective module is after removal of a touch protection cover element accessible by a tool used for disengaging the engaging elements integrated in the respective module or provided on the rear side of the housing of the touch-protected busbar board from the assembly element for removal of the touch-protected busbar board from the respective modules.

In a possible embodiment of the power supply module according to the present invention the power supply module is turnable along the z-axis by 180 degrees on the mounting platform such that its clamping block is facing an external power supply.

This is in particular advantageous if only one extension power supply module is used for power feeding of the busbar board. Depending whether the feeding conductors are coming from above or from below within the control cabinet the extension supply module can be turned accordingly.

In a still further possible embodiment of the power supply module according to the first aspect of the present invention, an internal electrical current supply path is provided between a clamping contact of the first clamping block of the power supply module and an associated busbar of the power distribution busbar system through an intermediate bar of said power supply module.

In a further possible embodiment of the power supply module according to the first aspect of the present invention, the power supply module comprises for each internal current supply path a current sensor element adapted to measure an electrical current flowing through the respective current supply path and/or comprises for each internal current supply path a voltage sensor element adapted to measure a voltage applied to the respective current supply path.

In a still further possible embodiment of the power supply module according to the first aspect of the present invention, the internal current supply path of the power supply module comprises a fuse element.

In a still further possible embodiment of the power supply module according to the first aspect of the present invention, the internal current supply path of the power supply module comprises a manually operated or controllable switching element for interruption of the respective internal current supply path of the power supply module to provide protection, in particular overcurrent protection and/or overload protection, to loads receiving their power supplies through busbar components connected to busbars of the power distribution busbar system.

In a further possible embodiment of the power supply module according to the first aspect of the present invention, the controllable switching element comprises a semiconductor power switch controlled by an integrated control unit of said power supply module in response to sensor signals generated by sensor elements of the power supply module.

In a still further possible embodiment of the power supply module according to the first aspect of the present invention, the power supply module comprises a display unit adapted to display a momentary switching state of the integrated switching elements, adapted to display measurement information measured by integrated sensor elements, and/or adapted to display states of integrated fuse elements and/or of connected busbar components and of their loads.

The invention provides according to a further aspect a control cabinet comprising the features of claim 21

The invention provides according to a second aspect a control cabinet comprising a mounting platform for mounting at least one power supply module according to the first aspect of the present invention used for a rear-side power supply of electrical power to or from a power distribution busbar system of the respective control cabinet.

In a possible embodiment of the control cabinet according to the second aspect of the present invention, the power distribution system comprises a number of busbars used for distribution of AC power or for distribution of DC power among busbar components connected to the busbars of the power distribution system and/or used for powerline communication between busbar components connected to the busbars of the power distribution system.

In a possible embodiment of the control cabinet according to the second aspect of the present invention, the busbar components comprise a motor starter, a switch disconnector, a circuit breaker, a power supply control apparatus and/or an adapter device.

The busbar components form front side busbar components accessible by a user from a front side of the control cabinet. They can be mounted or assembled directly to busbars or to touch protected busbar boards of the control cabinet without using of tool. The busbar components of the control cabinet can in a possible implementation plugged into slots of busbars or busbar boards having integrated busbars.

In a still further possible embodiment of the control cabinet according to the second aspect of the present invention, a resistive load, a capacitive load or an inductive load is connectable to a busbar component being connected to busbars of the power distribution busbar system of said control cabinet to receive a power supply via the respective busbar component.

In the following, possible embodiments of the different aspects of the present invention are described in more detail with reference to the enclosed figures.
- Fig. 1: shows a perspective view on a possible embodiment of a power supply module according to the first aspect of the present invention mounted on a mounting plate of a control cabinet;
- Fig. 2: shows a further perspective view on a possible embodiment of a power supply module according to the first aspect of the present invention with some touch protection elements blanked out ;
- Fig. 3: shows a further perspective view on a possible embodiment of a power supply module according to the first aspect of the present invention wherein some parts of the power supply module are removed to illustrate the internal functionality of the power supply module;
- Fig. 4: shows a further perspective view on a power supply module according to the first aspect of the present invention with mounted busbars of a power distribu- tion busbar system without some housing elements of the busbar system;
- Figs. 5A to 5F: show different views on a possible embodiment of the power supply module according to the first aspect of the present invention in more detail, in particular to illustrate a preferred implementation of touch protected electrical front side contacts of the power supply module;
- Fig. 6: shows a perspective view on a power supply module according to the first aspect of the present invention with an associated extension module and associated auxiliary modules mounted on a mounting plate of a control cabinet to which touch-protected busbar boards of the power distribution busbar system are electrically and mechanically connected;
- Fig. 7: illustrates the modules mounted on the mounting plate after removal of the touch-protected busbar boards;
- Fig. 8: shows a further perspective view on a further alternative exemplary embodiment of a power distribution busbar system where the touch-protected busbar boards are mounted on supporting bars of a frame mounted busbar system;
- Fig. 9: illustrates the frame mounted busbar system of Fig. 8 with the power supply module according to the present invention with removed touch-protected busbar boards;
- Fig. 10: shows a schematic circuit diagram for illustrating a possible exemplary embodiment of a power supply module according to the first aspect of the present invention;
- Fig. 11: shows a further circuit diagram for illustrating a further possible exemplary embodiment of a power supply module according to the first aspect of the present invention;
- Fig. 12: shows a perspective view for illustrating a removal of a busbar board from a rear side power supply module and its associated auxiliary support module using a tool;
- Fig. 13A,B: illustrate a power supply module with contact touch protection elements being sealed or locked to illustrate that in this state the locking part is not accessible;
- Fig. 14: illustrates an embodiment where a busbar board is mounted on two main power supply modules having prism clamps;
- Fig. 15A,B,C: illustrate fixing of conductors to contact elements of a contact block with opened contact touch protection elements;
- Fig. 16: illustrates disengaging of a busbar board from a power supply module using a tool and corresponds to Fig. 15C;
- Fig.17A-C: illustrate disengaging of a busbar board from an auxiliary support module using a tool;
- Fig.18: shows a further perspective view to illustrate fixing of conductors to contact elements (box terminals) of a contact block with opened contact touch protection elements;
- Fig.19: shows the mounting of busbar components on a busbar board supplied by a power supply module according to the present invention;
- Figs.20A, 20B: illustrate the contacting of a busbar component through a busbar board;

Figs.21A, 21B illustrate a tolerance compensation.

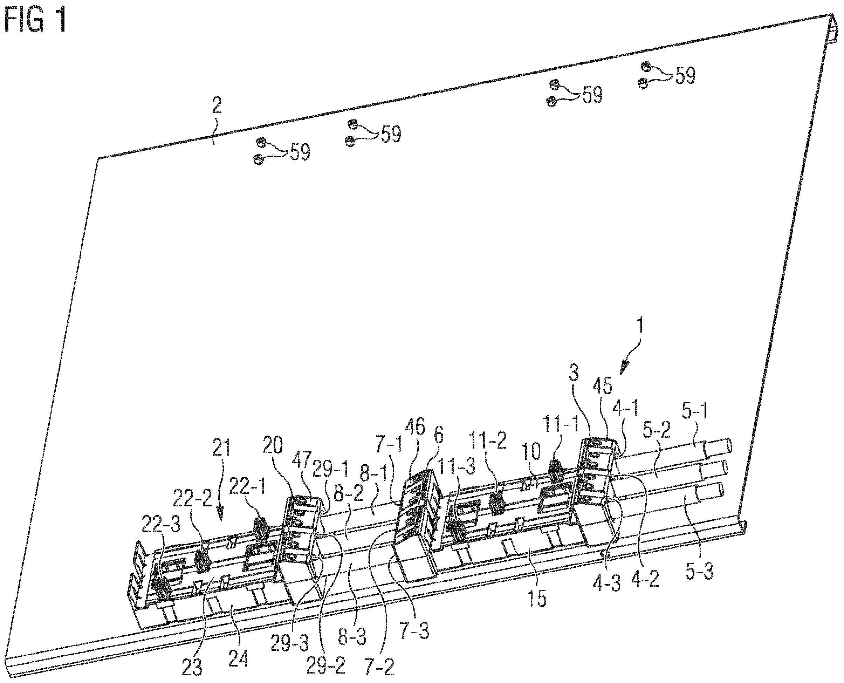

As can be seen from the perspective view illustrated in Fig. 1, a power supply module 1 according to the first aspect of the present invention can be connected to a mounting platform of a control cabinet. In the illustrated embodiment of Fig. 1, the mounting platform of the control cabinet comprises a mounting plate 2 which is provided to mount one or more power supply modules of a power distribution busbar system of the control cabinet. The power distribution busbar system can comprise a number N of busbars 16 used for distribution of electrical power for busbar components connectable to the busbars 16 of the power distribution busbar system. The busbars 16 are integrated in a busbar board 27. In the illustrated embodiment of Fig. 1, the power supply module 1 comprises a first clamping block 3 having a predetermined number N (in Fig.1 N=3) of clamping contacts 4 adapted to clamp electrical conductors 5 to the first clamping block 3. In the illustrated embodiment of Fig. 1, the first clamping block 3 comprises three clamping contacts 4-1, 4-2, 4-3 adapted to receive a corresponding number N of electrical conductors 5-1, 5-2, 5-3. In the illustrated embodiment of Fig. 1, the electrical conductors 5-i comprise round contactors consisting of an electrical conductive material such as copper or aluminium. The conductors 5-i can also comprise laminated copper bars or similar conducting elements to receive an electrical power supply current from an external power supply source. The clamping contacts 4 of the first clamping block 3 can comprise prism clamp contacts or box terminal contacts or a screw system to fix cables with cable lugs.

The power supply module 1 comprises at least one (first) contact block 3 to receive electrical power. The power supply module 1 comprises in a possible embodiment a second clamping block 6 located on the opposite side of the power supply module 1 as shown in Fig.1. The second clamping block 6 also comprises a number N of clamping contacts 7-1, 7-2, 7-3 adapted to clamp electrical conductors 8 to the second clamping block 6. In the illustrated embodiment, three electrical conductors 8-1, 8-2, 8-3 can provide an electrical connection of the power supply module 1 to an extension power supply module 21 used for additional busbars. The provision of a second clamping block 6 also allows to form a chain of electrically connected rear side power supply modules 1 wherein the first clamping block 3-i of an i-th power supply module (1-i) is connected to the second clamping block 6-(i-1) of the previous power supply module (1-(i-1))with in the chain. The electrical conductors 5, 8 comprise electrically isolating mantles. The electrical conductors 5 can be electrically connected to a local power distribution system of a control cabinet. The power distribution system of the control cabinet comprises a DC power distribution system or comprises an AC power distribution system.

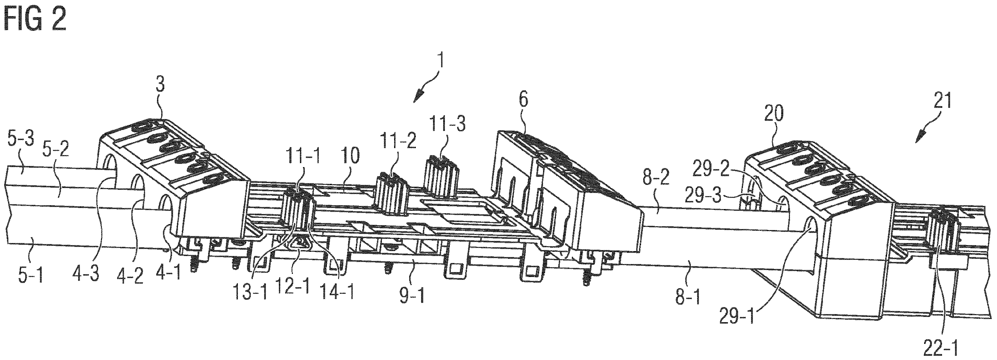

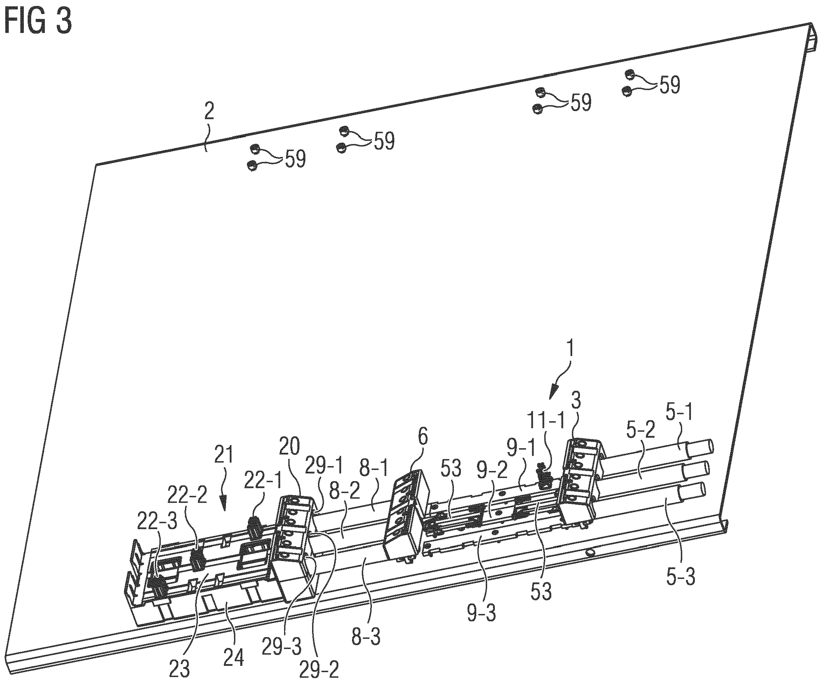

The power supply module 1 further comprises a number N of touch protected intermediate bars 9-1, 9-2, 9-3 provided between the electrical contacts 4-1,4-2,4-3 of the first clamping block 3 and the electrical contacts 7-1,7-2,7-3 of the second clamping block 6 as shown in Fig. 3. The intermediate bars 9-i are covered on the front side by an isolating housing front side 10 as shown in Fig. 1 and in Fig. 2 an by lateral touch protection cover elements 15. The front side housing front side 10 is removed in Fig. 3. The intermediate bars 9-1, 9-2, 9-3 provided between the first clamping block 3 and the second clamping block 6 provide an electrical connection between the electrical conductors 5-i clamped to the electrical contacts 4-1, 4-2,4-3 of the first clamping block 3 and the electrical conductors 8-i clamped to the electrical contacts 7-1,7-2, 7-3 of the second clamping block 6 of the power supply module 1.

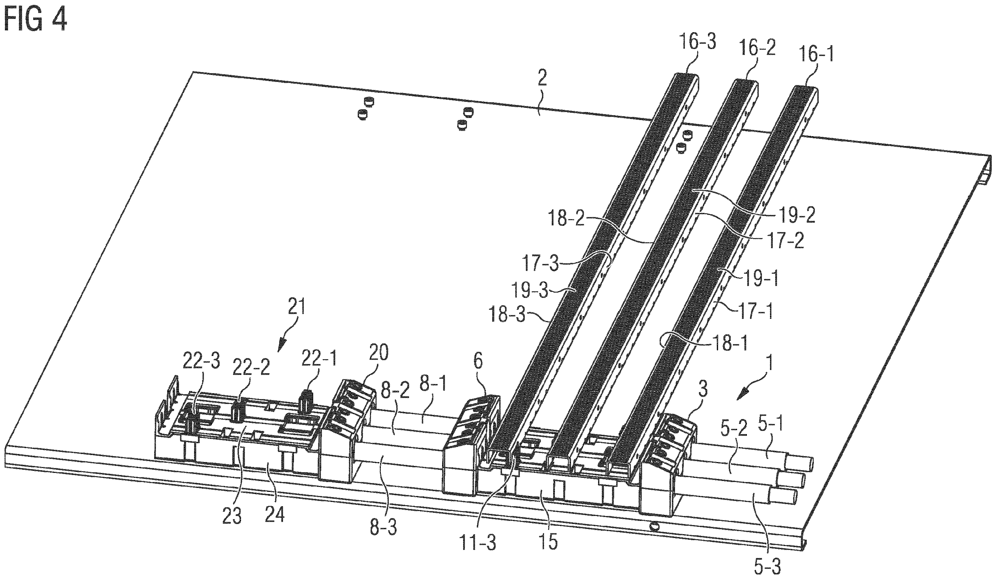

The power supply module 1 further comprises a number N of touch-protected electrical contacts 11-1, 11-2, 11-3 provided at a front side of the power supply module 1 and adapted to establish an electrical connection between busbars such as busbars 16 shown in Fig. 4 of the power distribution busbar system and the intermediate bars 9-1, 9-2, 9-3 of the power supply module 1 covered by the electrically isolating housing front side 10.

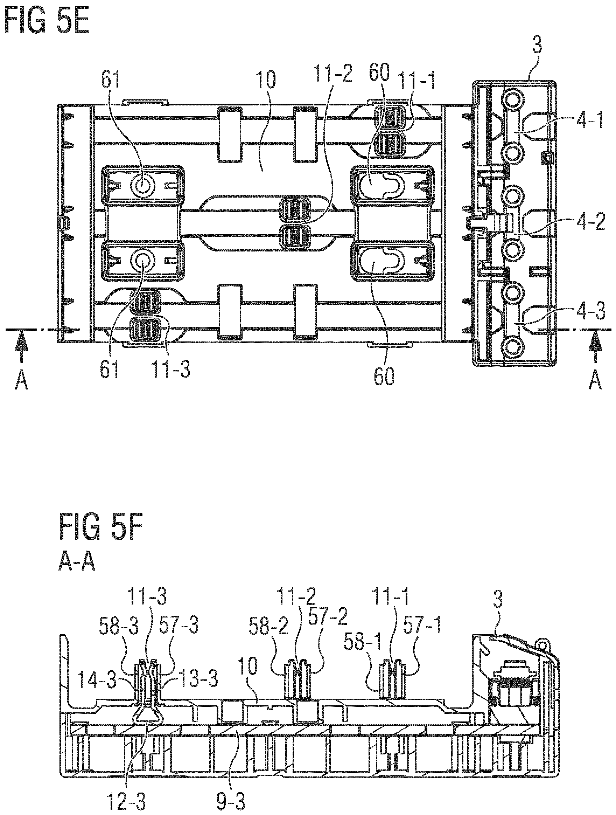

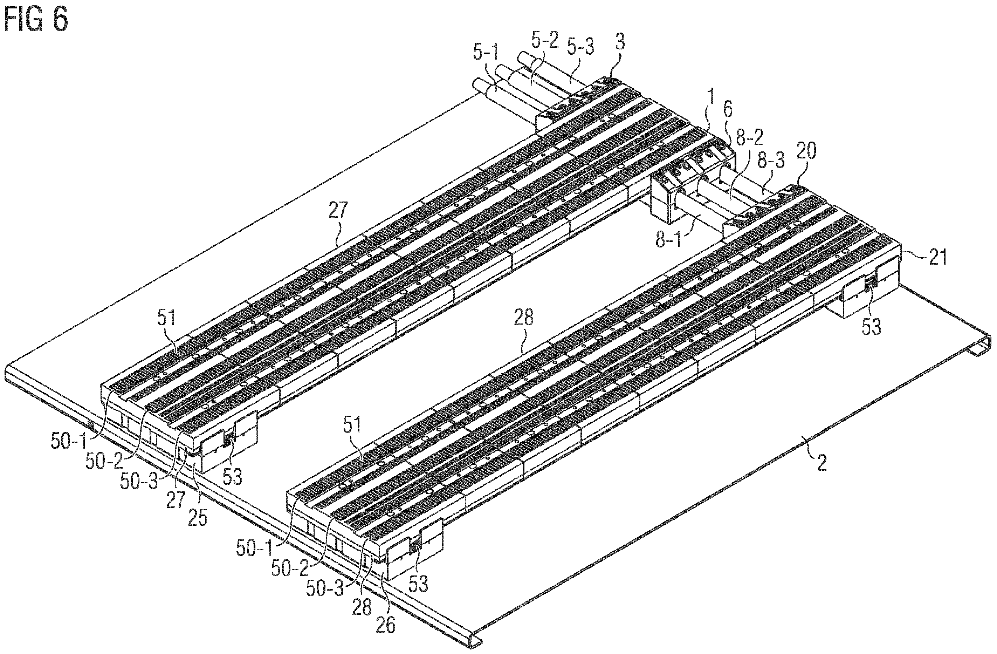

In a preferred embodiment of the power supply module 1 according to the first aspect of the present invention, the touch-protected electrical contacts 11-1, 11-2, 11-3 are also touch protected by the electrically isolating housing front side 10. The touch-protected electrical contacts 11-i comprise in a preferred embodiment electrical lyre or U shaped contacts 11 having a base contact portion 12-i (visible for the first lyre or U shaped contact 11-1 in Fig. 2 and visible for the third lyre or U shaped contact 11-3 in Fig. 5F) connecting two opposing leg contact portions 13-i, 14-i of the respective electrical lyre or U shaped contact 12-i. In the illustrated embodiment, for each intermediate bar 9-i of the power supply module 1, a pair of electrical lyre or U shaped contacts 11-i can be provided. The base contact portion 12-i of the electrical lyre or U shaped contact 11-i is electrically connected to an associated intermediate bar 9-i of the power supply module 1 as shown in Fig. 2 and in Fig.5F. In Fig. 2, the housing back side 15 of the power supply module 1 as illustrated in Fig. 1 has been removed thus making an internal structure of the power supply module 1 visible. The outer surfaces of the two leg contact portions 13-i, 14-i of each electrical lyre or U shaped contact 11-i are touch protected by the cover portions 57,58 of the electrically isolating housing front side 10. The housing front side 10 is provided to cover also the associated intermediate bars 9 lying beneath the housing front side 10 as can be seen in Fig.5F. This provides a touch protection for a user handling the power supply module 1. Further, the protruding leg contact portions 13-i, 14-i of each electrical lyre or U shaped contact 11-i comprise electrical contact surfaces facing each other. The remaining surface of each leg contact portion 13-i,14-i is covered by the protruding portions 57,58 of the housing front side 10 as shown in Fig.5F or may alternatively be coated with an electrically isolating and heat resistant material to provide finger-safe touch protection of both leg contact portions 13-i, 14-i of each electrical lyre or U shaped contact 11-i of said power supply module 1. Other kinds of contacts 11-i electrically isolated for a user can be used in alternative embodiments.Fig.1 and Fig. 3 illustrate also fixing screws 59 used for fixing the power supply modules 1,21 and associated auxiliary support modules 25,26 shown in Fig.6.

Fig. 4 illustrates the electromechanical connection of three busbars 16-1, 16-2, 16-3 of the power distribution busbar system of the control cabinet to the protruding electrical lyre or U shaped contacts 11-i of the power supply module 1. A portion of each busbar 16-i of the power distribution busbar system is pluggable between the electrical contact surfaces of the two leg contact portions 13-i, 14-i of each electrical lyre or U shaped contact 11-i to establish an electrical connection between the respective busbar 16-i of the power distribution busbar system and an intermediate bar 9-i of the power supply module 1 through the electrical lyre or U shaped contact 11-i.

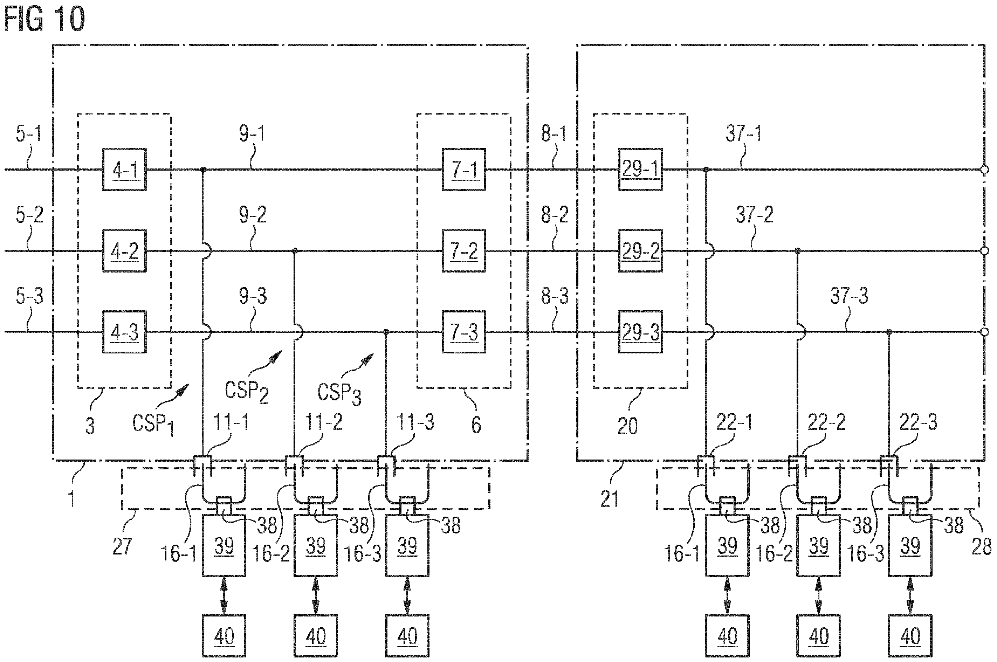

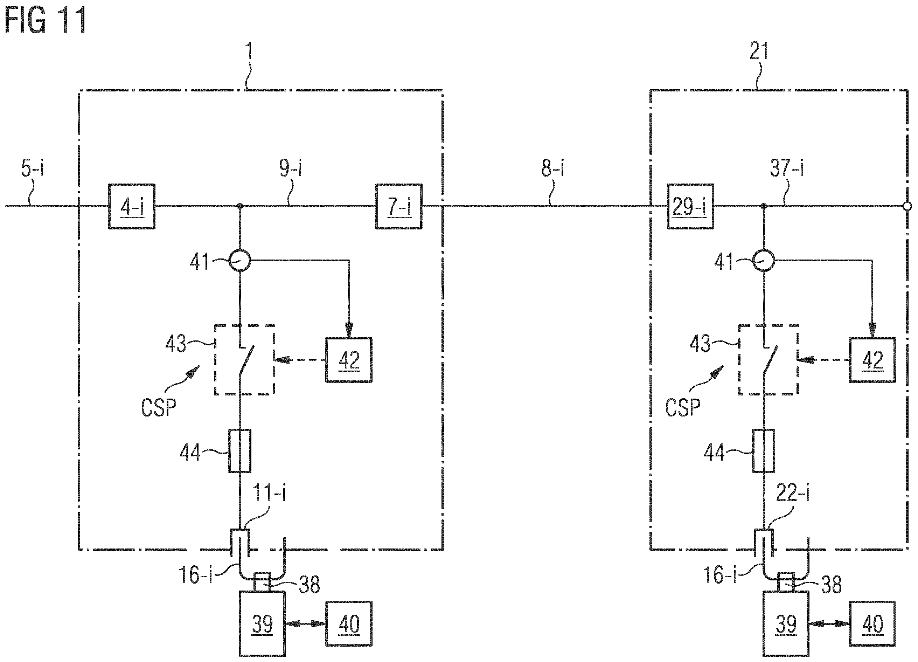

In the illustrated embodiment of Fig. 4, the busbar 16-1, 16-2, 16-3 comprise U-shaped busbars having busbar base portions 19 with contact slots 16A adapted to receive associated electrical contacts 39 of busbar components 40 as shown schematically in Figs 10,11.

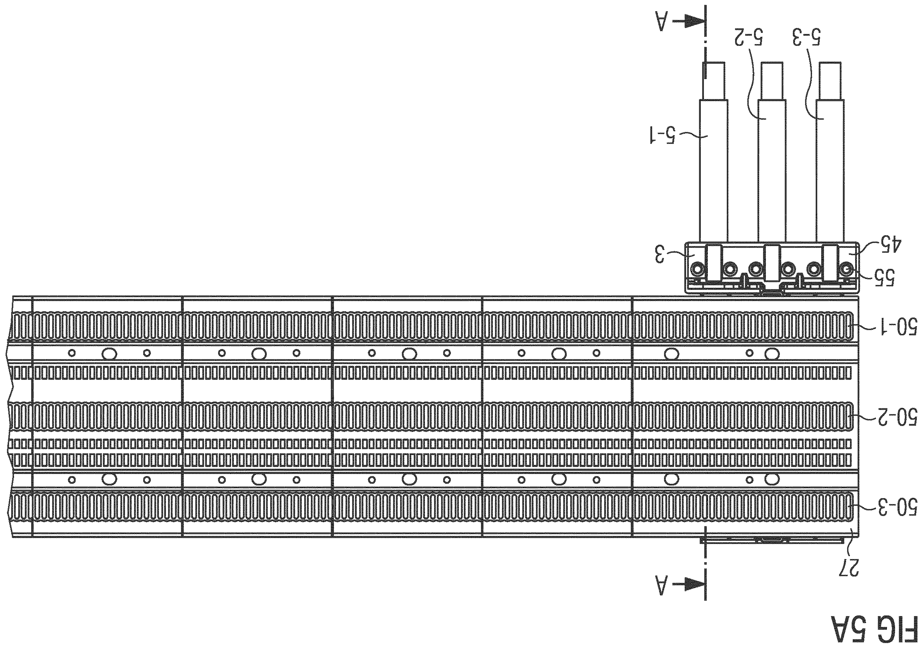

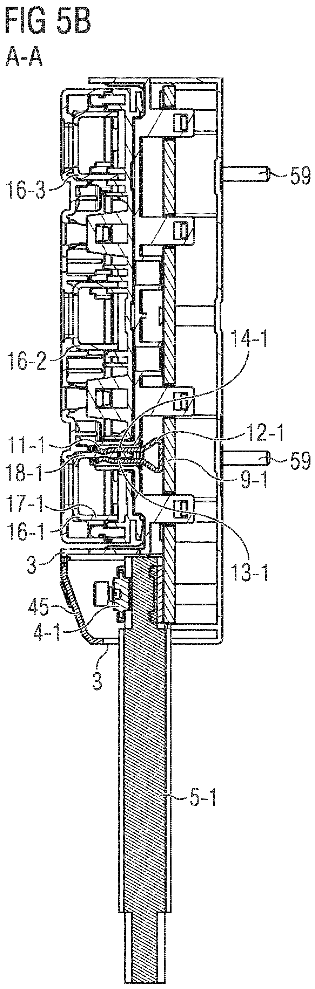

As can be seen in more detail in the cross section view of Fig. 5B, a portion of each busbar 16-i can be plugged between electrical contact surfaces of two leg contact portions 13-i,14-i of an electrical lyre or U shaped contact 11-i. In the illustrated embodiment of Fig. 4, each busbar 16-i comprises a U-shaped busbar having sidewalls 17-i, 18-i connected through a busbar base portion 19-i of the respective busbar 16-i. The busbar base portion 19 of the U-shaped busbar 16 of the power distribution busbar system comprises a plurality of contact slots 16A adapted to receive protruding electrical contacts 38 of busbar components 39 pluggable into the contact slots 16A of the busbar base portion 19 of the respective U-shaped busbar 16. A sidewall such as the sidewall 17 or the sidewall 18 of each U-shaped busbar can be plugged between the electrical contact surfaces of two leg contact portions 13, 14 of the respective electrical lyre or U shaped contact 11 to establish an electrical connection between the U-shaped busbar 16 and the intermediate bar 9 covered by the isolating housing front side 10 through the electrical lyre or U shaped contact 11 of the power supply module 1.

In the cross section view of Fig. 5B the U-shaped busbar 16-1 comprises two sidewalls 17-1, 18-1, wherein the sidewall 18-1 is plugged between the two leg portions 13-1,14-1 of the contact 11-1 of the power supply module 1.Fig. 5A shows a front view on a busbar board 27 mounted on a power supply module 1. Fig.5B is a cross section view along the line A-A shown in Fig. 5A and shows also the fixing screws 59.

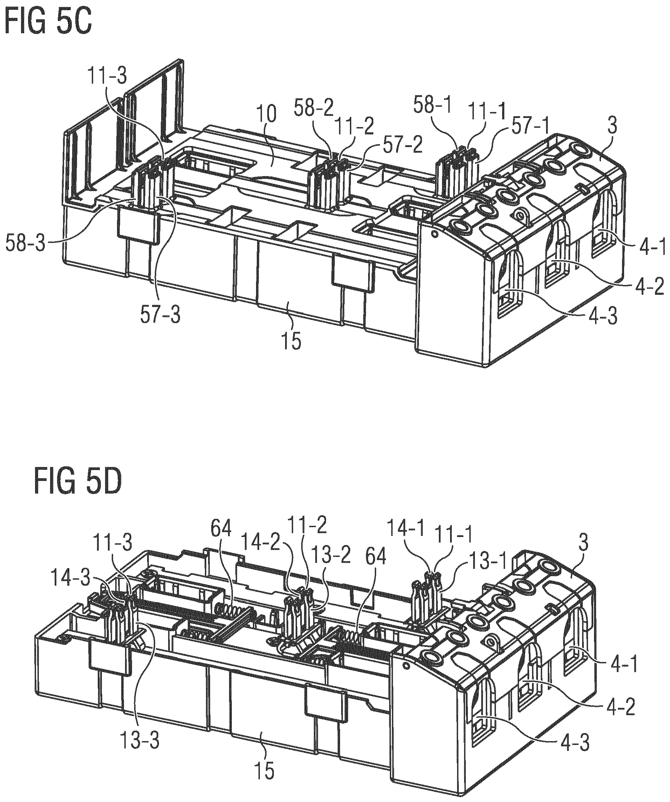

Figs. 5C to 5D are further views to illustrate the touch protected front facing contacts 11-1,11-2,11-3 of the power supply module 1. The touch protection of the contacts 11-i is achieved by the electrically isolating housing front side 10 of the power supply module 1 as best visible in the cross section view of Fig.5F. Figs. 5C to 5D show the protruding electrically isolating contact cover portions 57, 58 of housing front side 10 shown in Fig.5C which provide touch protection to the corresponding covered leg portions 13,14 of the front side contacts 11 of the power supply module 1 visible in Fig.5D where the housing front side 10 is removed.

Fig. 5E shows a front view on the power supply module 1 covered on its front side by the electrically isolating housing front side 10. Fig. 5E shows also a key hole 60 for a fixing screw 59 and a hole 61 for a fixing screw 59.

Fig. 5F is a cross section view along the line A-A in Fig.5E showing the electrically conductive leg portions 13,14 covered by the corresponding contact cover portions 57,58 of the electrically isolating housing front side 10 of the power supply module 1. The touch protected leg portion 13,14 are both attached to a common base portion 12 being in electrical contact with the associated intermediate bar 9 of the power supply module 1 as shown in Fig.5F.

In the embodiment of Figs. 5A to 5F the power supply module 1 comprises a single clamping block 3 whereas in the embodiment illustrated in Figs. 1 to 4 the power supply module 1 comprises a first clamping block 3 and a second clamping block 6 located on the opposite side of the first clamping block 3.

In a possible embodiment, the first clamping block 3 and the second clamping block 6 of the power supply module 1 are both touch-protected by associated removable or pivotable touch protection cover elements 45, 46 to get access to the clamping contacts 4, 7 of the respective clamping blocks 3, 6. In a possible embodiment, each removable touch protection cover element 45, 46 of a clamping block 3, 6 of the power supply module 1 can be secured by a sealing element 48 or by a locking element 49 against unintentional removal of the touch protection cover element by a user. The clamping contacts 4, 7 of the clamping blocks 3, 6 can comprise prism clamping contacts. In an alternative implementation, the clamping contacts 4, 7 of the clamping blocks 3, 6 can also comprise box terminal contacts.

In a preferred embodiment of the power supply module 1 according to the first aspect of the present invention, the clamping contacts 7 of the second clamping block 6 provide a loop-through functionality to loop the electrical conductors 5-i clamped to the clamping contacts 4 of the first clamping block 3 of the power supply module 1 via the intermediate bars 9-i and the intermediate conductors 8-i to clamping contacts of a clamping block 20 of an extension power supply module 21 as illustrated in Figs. 1 to 4. The structure of the extension power supply module 21 is similar to the structure of the main power supply module 1, however, the extension power supply module 21 only comprises in the illustrated embodiment a single clamping block 20 for connection to the main power supply module 1 through the intermediate conductors 8-1, 8-2, 8-3. The extension power supply module 21 also comprises at its front side electrical contacts 22-1, 22-2, 22-3 touch protected by an electrically isolating housing front side 23 for electrical connection of additional busbars of the power distribution busbar system of the control cabinet. The extension power supply module 21 is also provided for rear-side power supply of a busbars of the power distribution busbar system. The extension power supply module 21 comprises electrically isolating sidewalls 24 as shown in Figs. 1,3,4. The contact block 20 of the extension power supply module 21 comprises also a touch protection element 47.

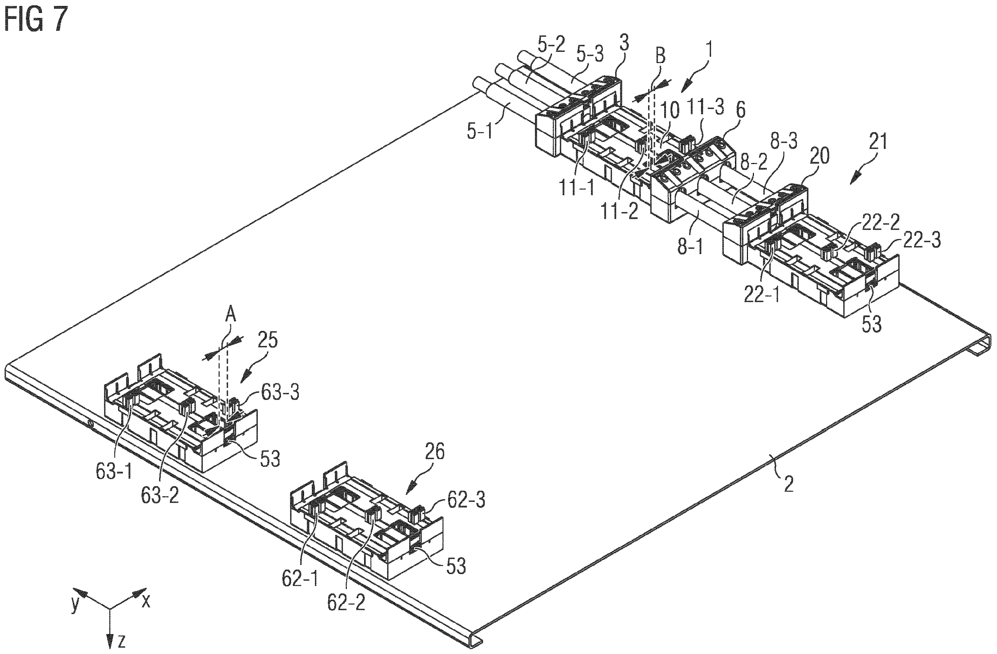

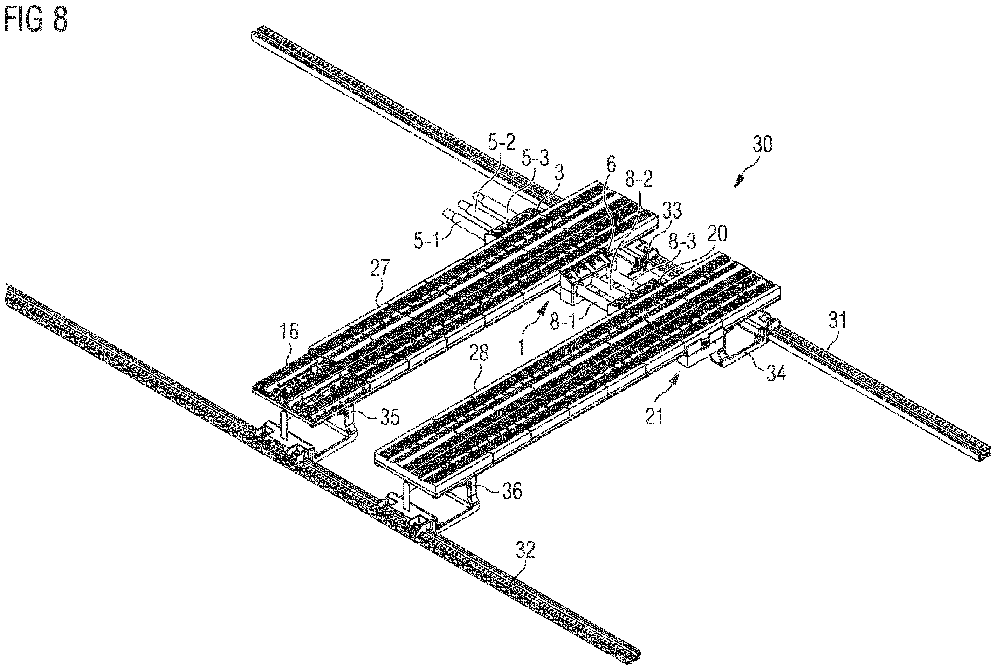

The control cabinet comprises a mounting platform which can be used to mount the main power supply module 1, an associated extension power supply module 21 as well as auxiliary modules 25, 26 as illustrated in Figs. 6, 7. The auxiliary modules 25, 26 can be mounted on the mounting platform 2 of the control cabinet to provide mechanical support to the busbars 16-i connected to the at least one main power supply module 1 and to the busbars mounted to the extension power supply module 21. In a preferred embodiment, the structure of the auxiliary modules 25, 26 is similar to the structure of the power supply modules, however, without the provision of contact blocks. The busbars 16 of the power distribution busbar system are integrated in housings of the touch-protected busbar boards 27, 28 as illustrated in Figs. 6, 8.

As can be seen in Fig. 6, a first touch-protected busbar board 27 is mounted on the main power supply module 1 and its associated auxiliary support module 25. A second touch-protected busbar board 28 is mounted on the extension power supply module 21 and its associated mechanical auxiliary support module 26. Both touch-protected busbar boards 27, 28 can comprise a predetermined number of busbars 16 integrated within the housing of the respective touch-protected busbar board 27, 28. In the illustrated embodiment of Fig. 6, the control cabinet comprises a mounting plate 2 to which the power supply module 1, the associated extension power supply module 21 and the associated auxiliary support modules 25, 26 are fixed, for instance by means of screws. The front side of the touch-protected busbar boards 27, 28 comprises several (e.g. three) rows 50-1, 50-2, 50-3 each comprising a plurality of equidistant contact openings 51(e.g. slots) corresponding to the slots 16A of the underlying busbars 16-i of the power distribution busbar system. In this way, it is possible to plug protruding electrical contacts 39 of busbar components 40 such as motor starters or switch disconnectors or other kinds of power supply control apparatuses through the contact openings 51 at the front side of the housing of the busbar boards 27, 28 into the corresponding slots 16A of the busbars 16-i encapsulated by the housing of the respective busbar board 27,28 of the power distribution busbar system.

In a possible embodiment of the power supply module 1, the associated extension power supply module 21 as well as the auxiliary support modules 25, 26 comprise assembly elements adapted to receive engaging elements provided on a rear side of a housing of a touch-protected busbar board 27, 28 which can be used for a tool-free assembly of the touch-protected busbar board 27, 28 on the respective modules mounted on the mounting plate 2 of the control cabinet. In this way, a user can clip a busbar board such as the busbar board 27, 28 illustrated in Fig. 6 without using any kind of tool onto the power supply modules 1, 21 and associated mechanical auxiliary support modules 25, 26. In this way, the mounting of the touch-protected busbar boards 27, 28 can be performed easily and in a complete safe manner without requiring the use of a tool.

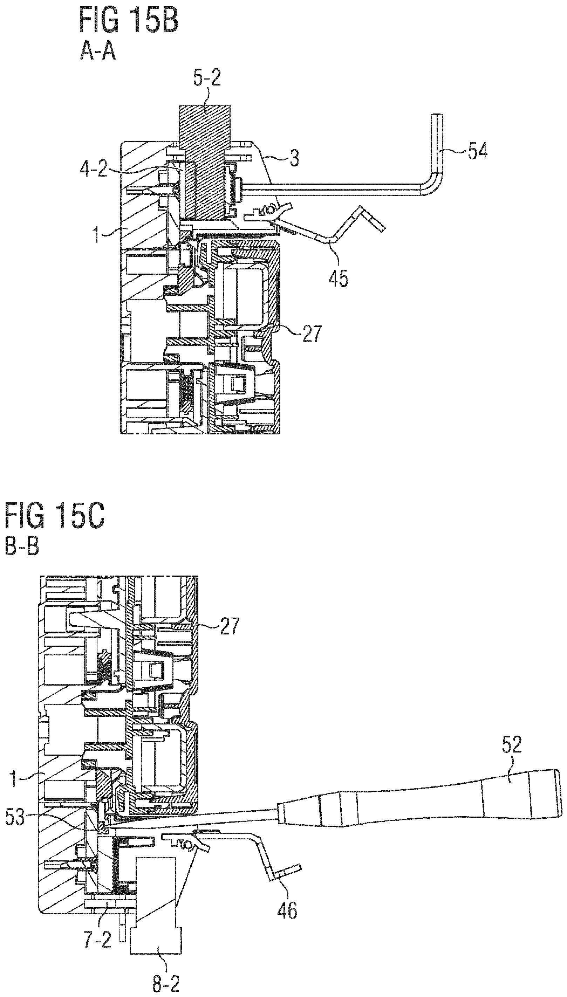

In a further possible embodiment, the assembly element of the power supply module 1, of the associated extension power supply module 21 and of the associated mechanical auxiliary modules 25, 26 used for the tool-free assembly of the touch-protected busbar boards 27, 28 is after removal of a corresponding touch protection cover element 45,46 accessible by a tool 52 such as a scew driver. This tool 52 can be used for disengaging the locking part 53 being integrated in the respective modules 1,21,25,26 or being provided on the rear side of the housing of the touch-protected busbar board 27, 28 from the assembly elements for removal of the touch-protected busbar boards 27, 28 from the respective modules fixed to the mounting plate 2 of the control cabinet. For instance, a user can after removal or opening of a touch protection cover element 45, 46, 47 make use of a screwdriver 52 for disassembly of the touch-protected busbar boards 27, 28 from the corresponding modules as also shown in Figs. 15C, 16, 17B, 17C.

In a possible embodiment each power supply module 1,21 and each auxiliary support module 25,26 can comprise two locking parts 53. To remove the busbar boards 27,28 from the power supply module 1,21 and from the associated auxiliary support module 25,26 the upper engaging element 53 is drawn by the screw driver 52 in a positive Y-direction and the lower engaging element 53 in a negative Y-direction. In the disengaged position the respective locking part 53 then releases the busbar board 27,28, i.e. moving the busbar board 27,28 in Z-direction is now possible. To avoid that a user has to handle all four element simultaneously there is a fixed state in disengaged position (parking position) for each locking part 53.In its engaged locking position the locking part 53 does restrict the degree of moving freedom of the busbar boards in Z-direction.

Fig. 7 shows the mechanical support auxiliary modules 25, 26 used for receiving the busbar boards 27, 28 of the power distribution busbar system in a coordinate system having a X-direction, a Y-direction and a Z-direction. The auxiliary support modules 25, 26 also comprise electrically isolating contact cover portions 62, 63 of for receiving portions of busbars 16, however, these cover portions 62,63 are only provided for mechanical purposes without transporting an electrical current.

In the embodiments illustrated in Fig. 1 to Fig. 7, the power supply distribution busbar system is mounted on a mounting plate 2.

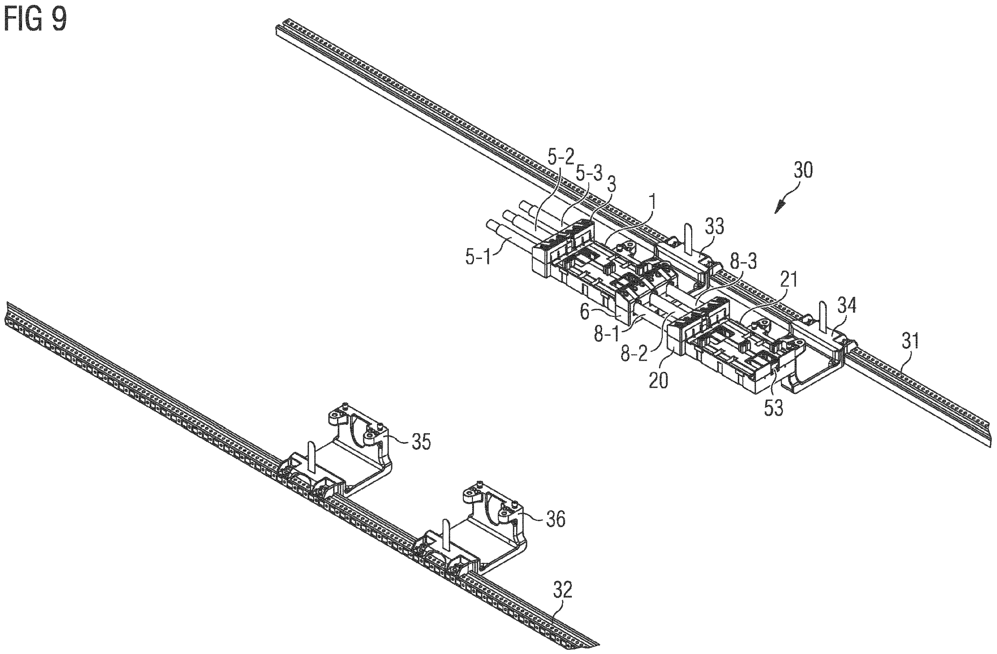

In an alternative embodiment, the busbar boards 27,28 of the power distribution busbar system can also be mounted on a frame mounted busbar system 30 as illustrated in Figs. 8, 9 having at least two supporting bars 31, 32. In the illustrated embodiment, brackets 33, 34 are used for fixing busbar boards 27, 28 to a first supporting bar 31 of the frame mounted busbar system 30. Further, brackets 35, 36 can be used to fix the other distal end of the busbar boards 27, 28 with the integrated busbars 16 to the other opposing supporting bar 32 of the frame mounted busbar system 30. Initially the brackets 33 to 36 are fixed to the supporting bars 31, 32. Then the busbar boards 27, 28 are fixed to the brackets 33 to 36. Finally the power supply module 1 is plugged from behind into the busbar boards 27, 28 and is attached in this way to the busbar boards 27, 28.

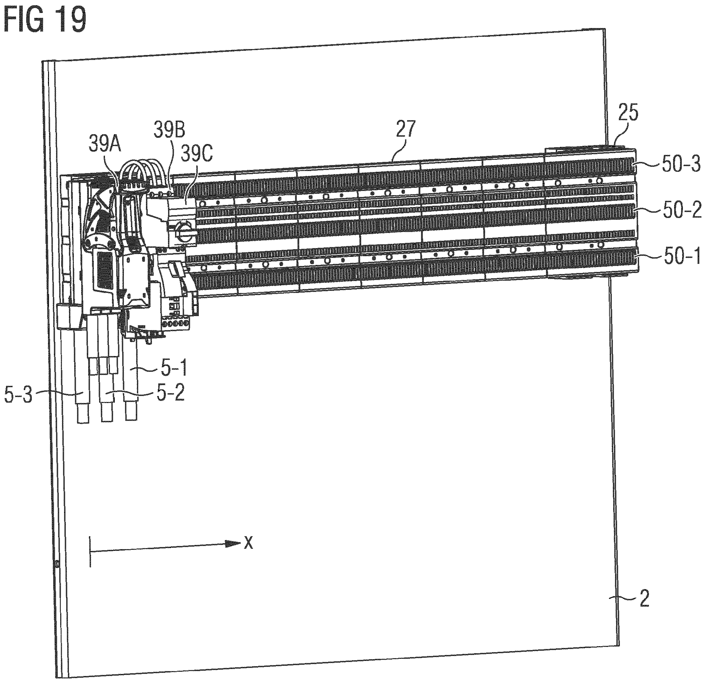

The power supply modules 1, 21, i.e. the main power supply module 1 as well as the extension power supply module 21, can each comprise an internal electrical current supply path CSP provided between a clamping contact 4 of the first clamping block 3, 20 of the respective power supply module 1, 21 and an associated busbar 16 of the power distribution busbar system through an intermediate bar 9 of the respective power supply module 1, 21 as also shown in Fig.10. In a possible implementation, the power supply module 1 can comprise for each internal current supply path CSP a current sensor element 41 adapted to measure an electrical current I flowing through the respective current supply path CSP and/or comprise a voltage sensor element adapted to measure a voltage V applied to the respective current supply path CSP. The internal current supply path CSP can comprise further elements such as a switch 43 or a fuse element 44 as shown in Fig.11. The internal current supply paths CSPs of the power supply module 1 can comprise in a possible embodiment each a manually operated or controllable switching element 43 for interruption of the respective internal current supply path CSP of the power supply module 1 as illustrated schematically in Fig. 11 to provide protection, in particular overcurrent protection and/or overload protection, to electrical load devices 40 receiving their power supply through busbar components 39 connected to busbars 16 of the power distribution busbar system. The controllable switching element 43 can comprise in a possible implementation a semiconductor power switch controlled by an integrated control unit 42 of the power supply module 1 in response to sensor signals generated by sensor elements 41 of the respective power supply module 1. Further, the power supply module 1 can comprise in a possible implementation a display unit adapted to display a momentary switching state of integrated switching elements 43 or to display measurement information provided by integrated sensor elements 41 and/or adapted to display states of integrated fuse elements 44 of the respective power supply module 1. Further the display unit of the power supply module 1 can display momentary operation states of the busbar components 39 and/or of their load devices 40. The busbar components 39 are accessible to a user from a front side of the control cabinet as also shown in Fig.19. Some of the busbar components 39 can comprise a user interface at a front side of a housing of the busbar component.

The internal current supply path CSP can be a bidirectional current supply path, i.e. the device 40 connected to the busbar component 39 can be a power consuming load device but also a power generating device providing electrical power fed back in a reverse power supply direction from the power generating device through the busbar component 39 and through the power supply module 1 into the power distribution system of the control cabinet where the electrical power is distributed to load devices of the control cabinet.

Figs. 10, 11 illustrate schematically a power supply module 1 according to the first aspect of the present invention. As can be seen in the diagram of Fig. 10, the clamping contact 4-i provided at the first clamping block 3 of the main power supply module 1 is internally electrically connected through an intermediate bar 9-i to an associated clamping contact 7-i provided at the opposing contact block 6 of the main power supply module 1. The outgoing clamping contact 7-i of the main power supply module 1 is connected via an extension conductor 8-i to a corresponding input clamping contact 29-i of the contact block 20 of the extension power supply module 21. The extension power supply module 21 comprises internal intermediate bars 37-i as shown in Fig. 10. The main power supply module 1 comprises front side touch protected electrical contacts 11-i connected internally to the intermediate bars 9-i of the main power supply module 1. In the same way, the extension power supply module 21 comprises front side touch protected electrical contacts 22-i connected to the internal intermediate busbars 37-i of the extension power supply module 21. A portion of each busbar 16 is plugged between the surfaces of the electrical contacts such as electrical lyre or U shaped contacts 11-i, 22-i of the power supply modules 1, 21 as shown in Fig. 10. The busbars 16 can in turn comprise contact slots 16A or other contact means to receive electrical contacts 38 of busbar components 39 connectable to the busbars 16 of the power distribution busbar system of the control cabinet as illustrated schematically in Fig. 10. The busbars 16 are integrated in a touch protected busbar board 27, 28.

The busbar components 39 are accessible by a used and provided at the front side of the control cabinet. Busbar componets 39 can comprise for instance motor starters, switch disconnectors, circuit breakers or other kinds of power supply control apparatuses. Further, the busbar components 39 can also comprise adapter devices such as the adapter device 39B shown in Fig. 19. In a possible embodiment, to each busbar component 39, at least one electrical load device 40 or electrical power generation or power storage device can be connected through an interface at a front side of the busbar component 39.

The electrical load device 40 can comprise a resistive load, a capacitive load or an inductive load such as a motor connectable to a corresponding busbar component 39 such as a motor starter being connected to busbars 16 of the power distribution busbar system of the control cabinet to receive a power supply via the busbar component 39. In the illustrated embodiments of Fig. 10, the different busbar components 39 can be plugged into slots 16A of the U-shaped busbars 16-i which can be integrated in a housing of a touch-protected busbar board such as the busbar boards 27, 28.

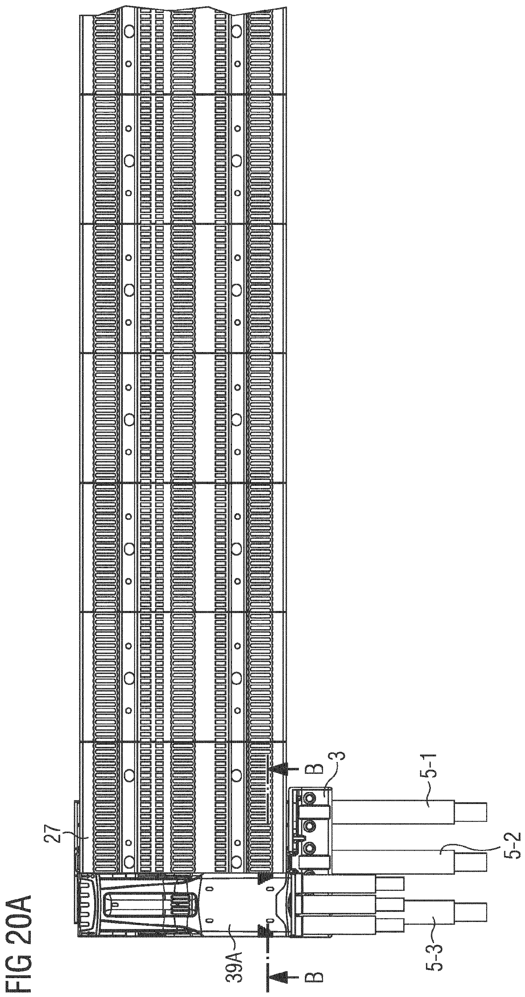

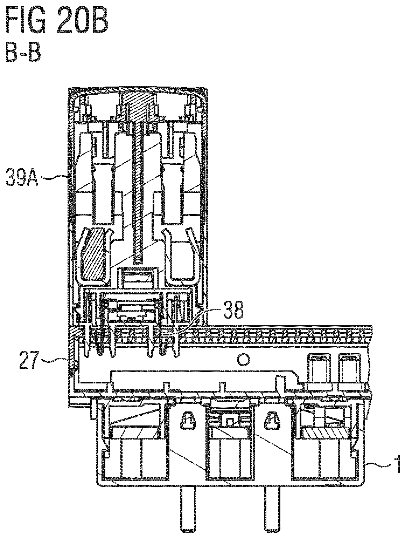

Further a load device 40 or a power generation device 40 can be connected to an interface at the front side of the housing of the busbar component 39 which is connected by its contacts 38 to busbars 16 integrated in a busbar board 27 of the power distribution system of said control cabinet as also shown in Fig 20B forming a cross section view of Fig.20A along line B-B.

In this way it is also possible to feed electrical power into the power distribution busbar system of the control cabinet from local power generation devices. The power generation or storage device can be for instance comprise a battery providing DC power or comprise a generator providing AC power.

Accordingly an electrical current can flow in two directions, i.e. in a forward supply direction from the power distribution system to a load device 40 or in a reverse supply direction from a power generation device 40 back into local the power distribution system of the control cabinet. In a possible implementation the power supply direction, i.e. the direction of the flow of electrical current I flowing along the current supply path CSP is detected by sensor elements provided at the current supply path CSP and notified to the controller 42 shown in Fig.11. This information can used for performing a local power balancing and/or for protection of connected entities 40 by controllers 42 communicating with each other through a wireless or wired communication interface.

Fig. 19 illustrates the mounting of exemplary busbar components 39A, 39B, 39C on the front side of the busbar board 27 mounted in X-direction on a mounting plate 2 of the control cabinet. The busbar board 27 with its integrated busbars 16 is mounted in a preferred embodiment in a horizontal direction onto the mounting platform, i.e. in this embodiment the X-direction is horizontal. The busbar component 39A comprises a fuse switch disconnector. The busbar component 39B is an adapter onto which a motor starter 39 is assembled.

Fig. 11 shows a further exemplary embodiment of power supply modules 1, 21 with additional protection circuitry for protection of electrical loads 40 connected to the busbar components 39 of the system. In the illustrated embodiment of Fig. 11, the main power supply module 1 and the extension power supply module 21 both comprise a sensor element 41 provided in the internal current supply path CSP of the respective power supply module 1, 21. The sensor element 41 can comprise for instance a current sensor element adapted to measure an electrical current I flowing through the respective current supply path CSP via the busbar component 39 to an electrical load 40 mounted in the control cabinet. The sensor signal of the current sensor element 41 can be supplied to an integrated controller 42 provided within the main power supply module 1 and/or within the extension power supply module 21 as illustrated in Fig. 11. In a further possible embodiment, the power supply modules 1, 21 can also comprise a voltage sensor element adapted to measure a voltage applied to the respective current supply path. The sensor elements can provide sensor signals sampled by ADCs of the power supply module and stored as sensor data in a memory of the controller 42. The sensor data comprises a current profile and/or a voltage profile which can be processed by a processor of the controller 42 for overcurrent and/or overvoltage and/or overload detection or other fault events. In case of a detected fault event the controller 42 triggers the interruption of the affected current supply path CSP. The controller 42 can communicate in a possible embodiment with a control cabinet controller of the control cabinet via a wired or wireless communication link. In this way the control cabinet controller can be notified about a momentary operation state of the respective power supply module 1. The control cabinet controller can control the electrical connection of the local power distribution system integrated in the control cabinet to an external power supply system such as a power supply grid and/or can control the electrical connection of the local power distribution system to the power supply modules 1 of the control cabinet depending on the notified operation states of the power supply modules 1 of the control cabinet. For instance if an auxiliary light sensitive sensor indicates that a protection cover 45, 46 of a contact clamping block 3,6 has been opened by a user the affected power supply module 1 can be separated automatically by a switch controlled by the control cabinet controller from the local power distribution system of the control cabinet to protect the user.

The current supply path CSP of the power supply modules 1, 21 can comprise in a possible implementation a manually operated and/or a controllable switching element 43 used for interruption of the respective internal current supply path CSP of the power supply module 1 to provide protection to electrical loads 40 receiving the power supply through the busbar components 39 connected to the busbars 16 of the power distribution busbar system. In a possible embodiment, the switching element 43 can comprise a controllable semiconductor power switch (e.g. MOSFET) controlled by the integrated control unit 42 of the respective power supply module 1, 21 in response to sensor signals generated by sensor elements such as the current sensor element 41 of the power supply modules 1, 21. Each power supply module 1, 21 can comprise in a further implementation a display unit with a graphical user interface GUI adapted to display a momentary switching state of the integrated switching elements 43 and/or to display measurement information measured by integrated sensor elements 41 and/or to display states of integrated fuse elements 44 as illustrated in Fig. 11. Auxiliary sensor elements, in particular light sensitive sensor elements, may be used to detect whether cover elements 45, 46 have been opened by a user or not.

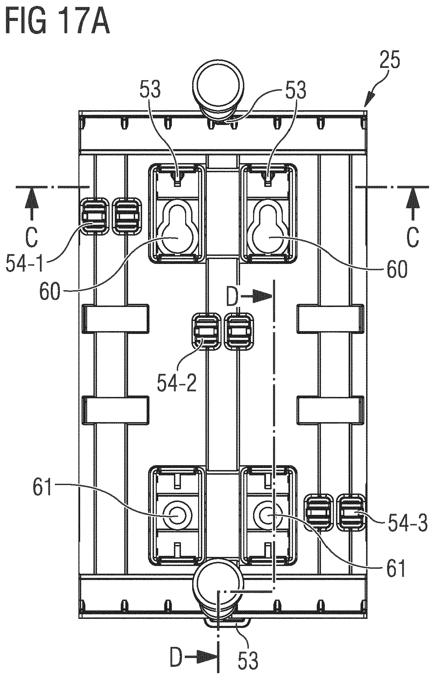

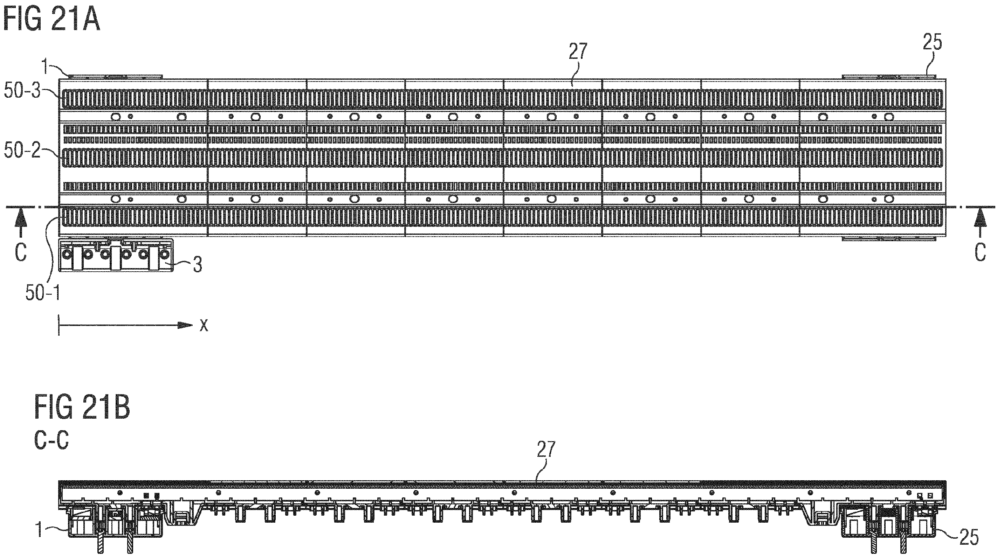

The power supply module 1 and the associated extension power supply module 21 provide in a preferred embodiment IP20 touch protection for a user. In a possible embodiment, the busbars 16-i integrated in the busbar boards 27, 28 can be mounted on a mechanical platform of the control cabinet in horizontal direction. In a possible embodiment, the associated auxiliary modules 25, 26 as illustrated in Fig. 7 comprise recesses adapted to receive engaging elements. The auxiliary support modules 25, 26 can be provided for tolerance compensation of manufactured assembly holes of the power supply module and of the auxiliary support module. For instance, the recesses of the mechanical support modules 25, 26 comprise a wiggle room of three millimeters to provide tolerance compensation to provide mechanical tolerance compensation in X-direction for manufactured screw holes of the power supply module 1 and of its associated auxiliary support module 25 as also visible in Fig. 17A and in Figs. 21A, 21B.

The power supply module 1 and the auxiliary support module 25 are both formed such that they can mechanically compensate manufacturing tolerances of their assembly holes in X-direction as shown in Fig.7 and in Figs 21A, 21B. The power supply module 1 forms a fixed bearing for the busbar board 27 and the auxiliary support module 25 forms a loose bearing for the busbar board 27. This can be achieved in that a width A of receiving pockets of the auxiliary support module 25 is larger than a width B of the receiving pockets of the power supply module 1 as illustrated in Fig.7.

The number N of busbars 16-i of the power distribution busbar system can vary depending on the use case. In the illustrated embodiment, the power distribution busbar system comprises N=3 busbars 16-1, 16-2, 16-3 for three different current phases L1, L2, L3 of an AC power supply system. In other use cases, the power supply modules 1, 21 can comprise N = 4 busbars or N=5 busbars to a power distribution system with an N busbar and/or a PE busbar. The power distribution system can also be used for DC power supply of electrical loads 40 though busbar components 39 plugged into contact slots 16A of busbars 16 of the power distribution system.

The main power supply module 1 may or may not comprise a connected extension power supply module 21. Accordingly, the provision of the extension power supply module 21 is optional. The main power supply module 1 without the extension power supply module 21 can be turned around along its longitudinal axis by 180° to provide either power supply through the electrical conductors 5-i from above or from the bottom of the control cabinet. For insulation of components of the busbar system, all parts are electrically isolated to provide safety for a user performing maintenance or repair services. The busbar components 39 can be plugged in a possible embodiment without use of any mechanical tools into the busbars 16 of the touch-protected busbar board 26, 28. The busbars 16 are adapted to collect electrical power from the power supply modules 1, 21. The power supply modules 1, 21 of the power distribution busbar system can also be used as outgoing feeders receiving electrical power from busbars 16-i and to supply the electrical power to external components.

The busbars 16-i of the electrical power supply system can comprise different shapes. In the illustrated embodiment, the busbars 16-i are formed by U-shaped busbars. The electrical busbars 16-i can also comprise other cross sections or shapes, for instance, they can comprise conventional electrical busbars having a rectangular cross sections. Other shapes are possible as well. For instance, the electrical busbars 16 may also comprise a round cross section.

The power distribution busbar system can comprise a couple of busbar holders for assembly. The electrical busbar system can be differentiated by the distance between the center of each busbar 16-i and may vary according to a maximum current carrying capacity of the power distribution busbar system. In a possible embodiment, the power distribution busbar system may comprise a 40 mm busbar system having a current carrying capacity of up to 300 to 400 Amps, a 60 mm busbar system having a current carrying capacity of up to 800 to 2500 Amps, a 100 mm busbar system having a current carrying capacity of up to 1250 Amps and/or a 185 mm busbar system comprising a current carrying capacity of up to 2500 Amps.

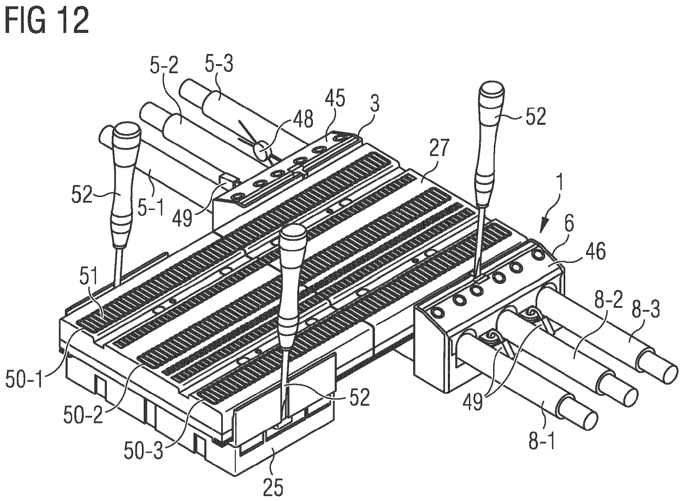

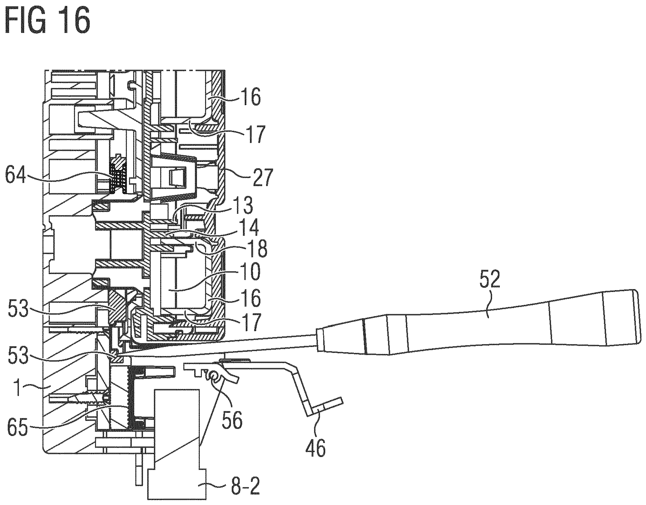

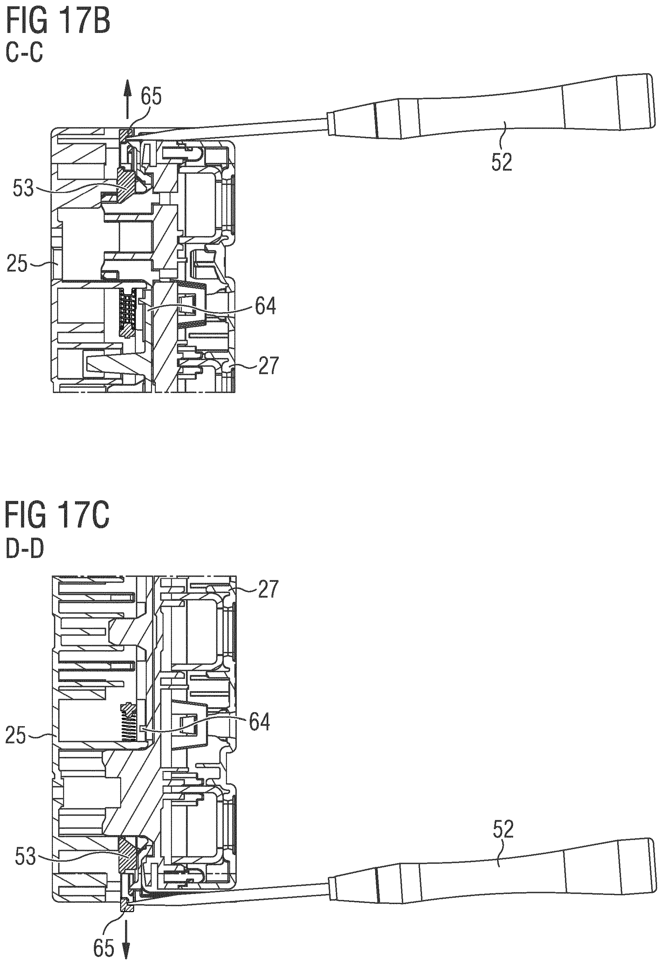

Fig. 12 shows a perspective view on a power supply module 1 and its associated auxiliary support module 25 to illustrate disassembly of a busbar board 27 by means of a tool 52. In the illustrated exemplary embodiment, the tool 52 used for disengaging the busbar board 27 from the rear side power supply module 1 and its associated auxiliary support module 25 comprises a screwdriver. As can be seen in Fig. 12, the main power supply module 1 comprises two contacting blocks 3, 6 each having a touch protection cover element 45, 46. After moving or opening the touch protection cover element 45, 46, the screwdriver 52 gets access to a locking part 53 as illustrated in the cross section view of Fig. 16. Similarly, the screwdriver 52 can be used for disengaging the busbar board 27 from the auxiliary support module 25 as also illustrated in Figs. 17A, 17B, 17C. Accordingly, whereas the mounting of the busbar board 27 onto the power supply module 1 and its associated auxiliary support module 25 can be performed without use of a tool 52, the disassembling of the busbar board 27 can only be performed by a user using a tool such as the screwdriver 52 as shown in Fig. 12. As also illustrated in Fig. 12, the touch protection cover elements 45, 46 can further be secured by using a seal 48 or locking elements 49. After removing the seal 48 and/or the locking elements 49, a user can open the corresponding touch protection element 45, 46 to get access to the underlying conductor contacts and to the locking part 53 as can be seen in Fig. 16. The seal 48 and the lock 49 as well as the touch protection cover element 45, 46 secured by the seal 48 and lock 49 guarantee that a user cannot unintentionally come into physical contact with a current carrying contacts 4,7 of the contact clamping blocks 3, 6.

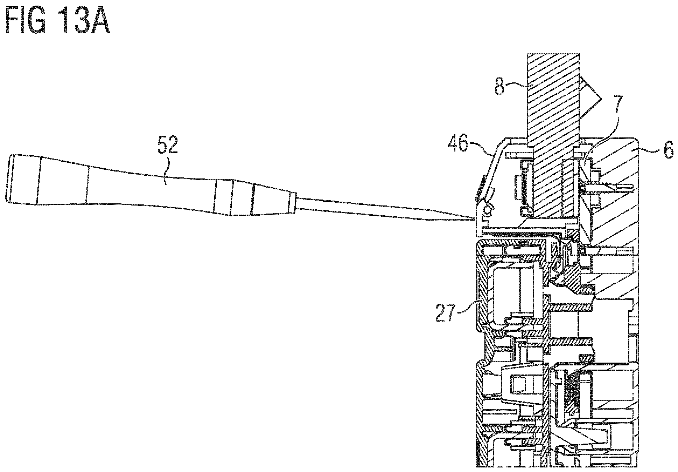

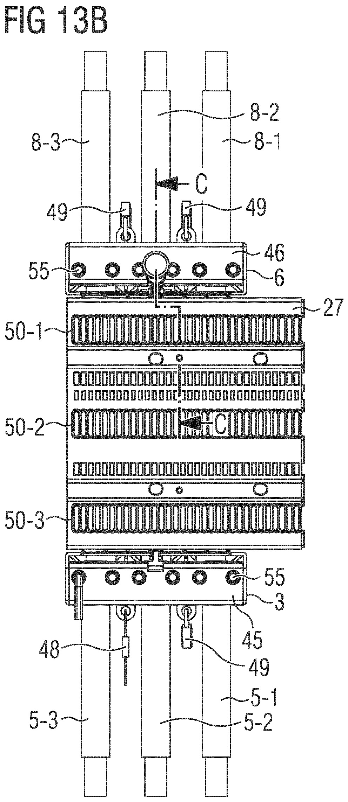

Figs. 13A, 13B show a cross section view and a front view on the main power supply module 1 as shown in Fig. 12. As can be seen in Fig. 13B, both touch protection elements 45, 46 are closed. Further, both touch protection elements 45, 46 are secured by means of a seal 48 and by locking elements 49. Fig. 13A shows a cross section view along the second contact block 6 with the closed touch protection element 46. As can be seen in Fig. 13A, a user cannot unintentionally come into contact with the contact elements 7 of the contact clamping block 6.

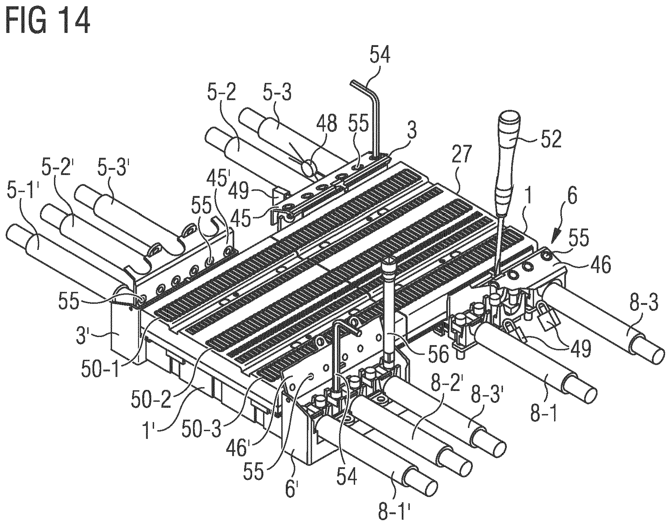

Fig. 14 shows a further exemplary embodiment where two main power supply modules 1, 1' are used to carry a busbar board 27. Accordingly, whereas the busbar board 27 shown in Fig. 6 is supported by a main power supply module 1 and its associated auxiliary support module 25, the busbar board 27 shown in Fig. 14 is mounted on two main rear side power supply modules 1, 1', having contact clamping blocks 3, 6, 3', 6' on both sides. Fig. 14 further illustrates an Allen key 54 which can be used to fix the electrical conductors 5, 8 to the corresponding electrical contacts 4, 7 of the contact clamping blocks 3, 6. In a possible implementation, the touch protection elements 45, 46 comprise corresponding holes or openings 55 through which the Allen key 54 can be passed for fixing the electrical conductors 5, 8 to the corresponding electrical contacts 4, 7. The number of the openings 55 in the housing front side 45,46 corresponds to the number of conductor contacts 4,7.It is also possible to pivot the touch protection elements 45, 46 to get access to the electrical contacts 4, 7. Also, other kinds of tools such as the tool 56 shown in Fig. 14 can be used for fixing the electrical conductors 5, 8 to the corresponding electrical contacts 4, 7 of the contact clamping blocks 3, 6. As can be seen in Fig. 14, whereas the touch protection elements 45, 46 of the first power supply module 1 are in the illustrated situation closed and sealed or blocked by a seal 48 and/or by locking elements 49, the touch protection elements 45', 46' of the second power supply module 1' have been opened to perform an assembly of the electrical conductors 5, 8 to the corresponding electrical contacts 4, 7'. A user may take a screwdriver 52 to open up the touch protection elements 45, 46 of the other power supply module 1 as well after removal of the seal 48 and locking elements 49 as also shown in Fig. 14. The conductors 5,8 comprise an electrically insulating mantle.

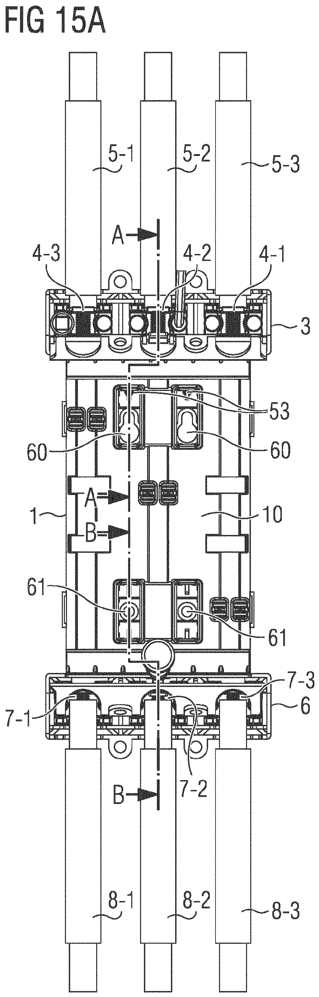

Figs. 15A, 15B, 15 C illustrate a power supply module 1 with opened-up touch protection elements 45, 46. Fig. 15B shows a cross section view along the line A-A and Fig. 15C shows a cross section view along the line B-B. After having opened up the touch protection cover element 46, a screwdriver 52 can be used for disengaging the busbar board 27 from the main power supply module 1 as illustrated in Fig. 15C and illustrated in more detail in Fig. 16.

At the contact clamping block 3, the Allen key 54 can be used to mount the electrical conductor 5 to the corresponding electrical contact 4-2 of the contact block 3 after having opened the touch protection cover element 45 as shown in Fig. 15B.

Fig. 16 illustrates the separation of the locking part 53 by the tip of a screwdriver 52. As can be seen in Fig. 16, the touch protection cover element 46 can be swiveled or pivoted around an element 56 to open up a passage for entering a tip portion of the screwdriver 52 along the sidewall of the housing of the busbar board 27 wherein the inserted tip portion of the screwdriver 52 is used to move a hook-shaped portion of the locking part 53. In this way, the housing of the busbar board 27 becomes disengaged and can be removed from the underlying power supply module 1. In contrast to the disassembly, the mounting of the busbar board 27 onto the power supply module 1 can be performed without requiring a tool. For mounting the busbar board 27, the housing of the busbar board 27 can simply be clipped onto the locking part 53. The locking part 53 can comprise a spring to move the locking part 53 into a parking position.

For each module there are two locking parts 53 which may be operated independently. Each of the two locking parts 53 is pressed by two associated mechanical springs 64 in a locking position of the respective locking part 53. These (four) mechanical springs 64 can be seen in Fig.5D and in Figs. 17B, 17C.

When handling by a screw driver 52 an engaging element of the locking part 53 which can be formed by an engaging hook 65 the locking part 53 is moved against the direction of the mechanical force F exerted by the mechanical spring 64 on the locking part 53 until the engaging hook 65 provided at the locking part 53 does fixate the locking part 53 in the parking position. In the parking position the locking part 53 does release the busbar board 27 so that it can be lifted from the power supply module 1 and from the associated auxiliary support module 25.

For performing a new mechanical engagement the engaging hook 65 of the locking part 53 is pressed back by the screw driver 52 and the associated mechanical springs 64 do press the locking part 53 back into its locking position.

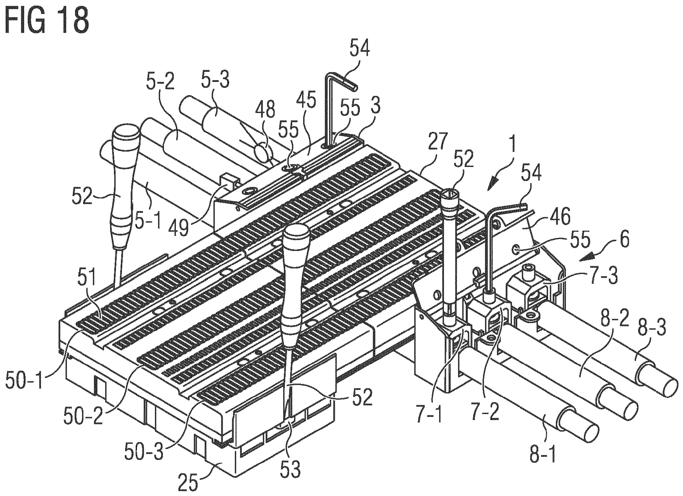

Figs. 17A, 17B, 17C illustrate the disassembly of the busbar board 27 from an auxiliary support module 25 by means of a screwdriver 52. The screwdriver 52 can be placed on a hook-shaped tip portion of the locking part 53 forming an engaging hook 65 to receive the tip of the screwdriver 52. The housing of the busbar board 27 can be used in this way as a lever for pushing the hook shaped tip portion of the locking part 53 in lateral direction as illustrated schematically in Figs. 17B, 17C thus disengaging the housing of the busbar board 27 from the underlying auxiliary support module 25. This is also illustrated in the perspective view of Fig. 18.

As can be seen in Fig.17A the modules comprise two key shaped holes 60 and two round holes 61. In a preferred orientation, i.e. when the conductors 5 are coming from below within the control cabinet, two screws are pre-screwed into the mounting plate 2 and subsequently the respective module is suspended by means of the two key shaped holes 60 onto these screws. Then the module is fixed with two additional screws through the round holes 61 illustrated in Fig.17A.

There are further different variants of the power supply module 1 according to the present invention that are not illustrated in Figs. 1 to 18. For instance, the number of busbars integrated in a busbar board 27 may vary. Accordingly, also the number of front facing electrical contacts 4, 7 of the power supply module 1 can vary depending on the use case. For instance, each power supply module 1 can be used for connection of, for instance, five electrical busbars carrying AC power supply phases L1, L2, L3 as well as N or P conductor busbars. In a possible embodiment, the power supply module 1 further comprises a control interface which is adapted to establish a communication between the controller 42 illustrated in Fig. 11 and an external controller of the control cabinet. In a further implementation, optical sensor elements can also be used to detect whether touch protection elements 45, 46 have been opened to increase security of the user.

### Reference numbers:

- 1: main rear side power supply module
- 2: mounting plate
- 3: first clamping block
- 4: clamping contacts
- 5: conductors
- 6: second clamping block
- 7: clamping contacts
- 8: conductors
- 9: intermediate bars
- 10: housing front side
- 11: touch protected front side contacts
- 12: contact base portion
- 13: contact leg portion
- 14: contact leg portion
- 15: housing back side
- 16: busbar
- 17: busbar sidewalls
- 18: busbar sidewalls
- 19: busbar base portion
- 20: clamping block
- 21: extension supply module
- 22: touch protected ront side contact
- 23: housing front side
- 24: housing back side
- 25: auxiliary support module
- 26: auxiliary support module
- 27: busbar board
- 28: busbar board
- 29: clamping contact
- 30: frame mounted busbar system
- 31: supporting bar
- 32: supporting bar
- 33: bracket
- 34: bracket
- 35: bracket
- 36: bracket
- 37: intermediate bars
- 38: electrical contact
- 39: busbar component
- 40: load/power supply
- 41: sensor
- 42: controller
- 43: switch
- 44: fuse
- 45: touch protection element
- 46: touch protection element
- 47: touch protection element
- 48: seal
- 49: lock
- 50: row of contact openings
- 51: contact opening
- 52: screwdriver/tool
- 53: locking part
- 54: allen key
- 55: opening
- 56: pivot element
- 57: electrically isolating contact cover portion of housing front side
- 58: electrically isolating contact cover portion of housing front side
- 59: fixing screw
- 60: key shaped hole for fixing screw
- 61: round hole for fixing screw
- 62: electrically isolating contact cover portion of housing front side of auxiliary support module
- 63: electrically isolating contact cover portion of housing front side of auxiliary support module
- 64: mechanical spring
- 65: engaging hook of locking part

## Claims

1. A power supply module (1) for rear-side power supply of a power distribution busbar system comprising a number, N, of busbars (16) integrated in a housing of a touch-protected busbar board (27, 28) for distribution of electrical power for busbar components (39) connectable to said busbars (16),
said power supply module (1) comprising:
an electrically isolating housing comprising a front side (10) and a back side (15) comprising lateral touch protection cover elements, wherein the isolating housing is configured to be mounted with said back side (15) to a mounting plate (2);
at least one clamping block (3; 6) having a number, N, of clamping contacts (4; 7) adapted to clamp electrical conductors (5; 8) to said clamping block (3; 6);
a number, N, of electrically conductive and touch protected intermediate bars (9) provided between the at least one clamping block (3;6) and a number, N, of touch-protected electrical contacts (11) provided at the front side (10) of said power supply module (1) and adapted to establish an electrical connection between the busbars (16) of said power distribution busbar system and the intermediate bars (9) of said power supply module (1),
wherein the intermediate bars (9) are covered on the front side by the electrically isolating housing front side (10) and by the lateral touch protection cover elements.

2. The power supply module according to claim 1
wherein the power supply module (1) comprises:
a first clamping block (3) having a number, N, of clamping contacts (4) adapted to clamp electrical conductors (5) to said first clamping block (3);and a second clamping block (6) having a number, N, of clamping contacts (7)adapted to clamp electrical conductors (8) to said second clamping block (6),
wherein the intermediate bars (9) are provided between said first clamping block (3) and said second clamping block (6) to provide electrical connection between the electrical conductors (5) clamped to clamping contacts (4) of the first clamping block (3) and the electrical conductors (8) clamped to the clamping contacts (7) of the second clamping block (6) of said power supply module (1).

3. The power supply module according to claim 1 or 2 wherein the touch-protected front side electrical contact (11) comprises an electrical lyre or U shaped contact having a base contact portion (12) connecting two opposing leg contact portions (13, 14) of said electrical lyre or U shaped contact (11).

4. The power supply module according to claim 3 wherein the base contact portion (12) of the electrical lyre or U shaped contact (11) is electrically connected to an associated intermediate bar (9) of said power supply module (1).

5. The power supply module according to claim 3 or 4 wherein the two leg contact portions (13, 14) of the electrical lyre or U shaped contact (11) are touch protected by electrically isolating contact cover portions (57,58) of an electrically isolating housing front side (10) adapted to cover the associated intermediate bars (9) lying beneath the housing front side (10).

6. The power supply module according to claim 5 wherein a portion of a busbar (16) of the power distribution busbar system is pluggable between the electrical contact surfaces of the two leg contact portions (13, 14) of the electrical lyre or U shaped contact (11) to establish an electrical connection between the busbar (16) of the power distribution busbar system and an intermediate bar (9) of said power supply module (1) through said electrical lyre or U shaped contact (11).

7. The power supply module according to claim 6 wherein the two leg contact portions (13, 14) of the electrical lyre or U shaped contact (11) facing each other and encompassing a portion of a busbar (16) of said power distribution busbar system are attracted to each other in response to an electrical overcurrent flowing through the electrical lyre or U shaped contact (11) and are pressed against the encompassed portion of the busbar (16) to prevent a separation of the busbar (16) from the electrical lyre or U shaped contact (11) of the power supply module (1)and to prevent the generation of an electrical arc.

8. The power supply module according to the preceding claims wherein the busbar (16) of the power distribution system has a U-shaped profile with two opposing busbar sidewalls (17, 18) connected by a busbar base portion (19) of the busbar (16),
wherein a sidewall of said U-shaped busbar (16) is pluggable between the electrical contact surfaces of the two leg contact portions (13, 14) of the respective electrical lyre or U shaped contact (11) to establish an electrical connection between the U-shaped busbar (16) and the intermediate bar (9) through the electrical lyre or U shaped contact (11).

9. The power supply module according to claim 8 wherein the busbar base portion (19) of the U-shaped busbar (16) of said power distribution busbar system comprises contact slots (16A) adapted to receive protruding electrical contacts (38) of busbar components (39) pluggable into the contact slots (20) of the busbar base portion (19) of said U-shaped busbar (16).

10. The power supply module according to any of the preceding claims 1 to 9 wherein the at least one clamping block (3; 6) of the power supply module (1) is touch-protected by associated removable or movable touch protection cover elements (45;46), wherein the removable or moveable touch protection cover element (45,46) of the at least one clamping block (3; 6) is secured by a sealing element (48) or by a lock element (49) against unintentional removal of the touch protection cover element (45;46) by a user.

11. The power supply module according to any of the preceding claims 1 to 10 wherein the clamping contacts (4, 7) of the at least one clamping block (3, 6) comprise prism clamp contacts or box terminal contacts or comprise a screw system for cable lugs.

12. The power supply module according to any of the preceding claims 2 to 11 wherein the clamping contacts (7) of the second clamping block (6) of said power supply module (1) provide a loop-through functionality to loop the electrical conductors (5) clamped to the clamping contacts (4) of the first clamping block (3) of said power supply module (1) via intermediate conductors (8) to clamping contacts of a clamping block (20) of an extension power supply module (21) provided for rear-side power supply of further busbars (16) of said power distribution system.

13. Assembly comprising a touch-protected busbar board (27) with integrated busbars (16) of a power distribution system, a power supply module (1) according to any of the preceding claims 1-12 and an associated auxiliary support module (25), wherein the busbar board (27) is mounted on the power supply module (1) and on the associated auxiliary support module (25) and wherein the power supply module (1) and its associated auxiliary module (25) are used to provide mechanical support to the mounted busbar board (27) and are adapted to provide a mechanical tolerance compensation for manufactured screw holes on the mounting plate (2) of the power supply module(1) and the associated auxiliary support module (25).

14. A control cabinet comprising a power supply module (1) according to any of the preceding claims 1-12, an associated extension power supply module (21) and associated auxiliary modules (25, 26), wherein the associated extension power supply module (21) and the associ-ated auxiliary modules (25, 26) are mounted on a mounting platform (2;30) of the control cabinet, wherein the mounting platform of the control cabinet comprises a mounting plate (2) to which the power supply module (1), the associated extension power supply module (21) and the auxiliary modules (25, 26) are fixed by means of fixing screws(59)or wherein the mounting platform comprises a frame mounted busbar system (30) having supporting bars (31, 32) to which busbar boards (27,28) are fixed by means of brackets (33-36) and wherein the power supply module (1) and the extension power supply module (21) are plugged into the rear side of the busbar boards (27,28).

15. The control cabinet according to claim 14 wherein the power supply module (1), the associated extension power supply module (21) and the associated auxiliary modules (25, 26) comprise integrated assembly elements of a locking part(53) used for a tool-free assembly of the touch-protected busbar board (27, 28) on the respective modules (1, 21, 25, 26).

16. The control cabinet according to claim 15 wherein the locking part (53) of the power supply module (1), of the associated extension power supply module (21) and of the associated auxiliary modules (25, 26) used for a tool-free assembly of the touch-protected busbar board (27, 28) on the respective module is after removal of a touch protection cover element (45,46,47) accessible by a tool (52) used for disengaging the engaged locking part(53) integrated at the front side within the respective modules (1,21,25,26) or provided on the rear side of the housing of the touch-protected busbar board (27, 28) from the assembly element for removal of the touch-protected busbar board (27, 28) from the respective modules (1, 21, 25, 26).

17. The power supply module according to the preceding claims 1 to 12 wherein an internal electrical current supply path is provided between a clamping contact (4) of the first clamping block (3) of the power supply module (1) and an associated busbar (16) of the power distribution busbar system through an intermediate bar (9) of said power supply module (1),wherein the power supply module (1) comprises for each internal current supply path a current sensor element (41) adapted to measure an electrical current flowing through the respective current supply path and/or comprises a voltage sensor element adapted to measure a voltage applied to the respective current supply path and/or comprises a fuse element (44).

18. The power supply module according to claim 17 wherein the internal current supply path of the power supply module (1) comprises a manually operated or controllable switching element (43) for interruption of the respective internal current supply path (CSP) of the power supply module (1) to provide protection, in particular overcurrent protection or overload protection, to loads (40) receiving their power supply through busbar components (39) connected to busbars (16) of the power distribution busbar system, wherein the controllable switching element (43) comprises a semiconductor power switch controlled by an integrated control unit (42) of said power supply module (1) in response to sensor signals generated by sensor elements (41) of the power supply module (1)and/or comprises an electromechanical switching element.

19. The power supply module according to any of the preceding claims 1 to 12, 17 or 18 wherein a busbar board (27;28) is mountable to the power supply module (1) manually without using a tool and is removable from the power supply module (1) by means of a manually operated tool(52) adapted to disengage mechanically sprung assembly elements of a locking part (53) integrated and accessible at the front side of the housing of the respective module.

20. The power supply module according to any of the preceding claims 1 to 12 or 17 to 19 wherein the power supply module (1) is turnable along the z axis by 180 degrees on the mounting platform such that its clamping block is facing an external power supply.

21. A control cabinet comprising a mounting platform for mounting at least one power supply module (1) according to any of the preceding claims 1 to 12 or 17 to 20 used for a rearside power supply of power consuming load devices (40) through busbar components (39) provided at a front side of the control cabinet by a power distribution busbar system of said control cabinet.

22. The control cabinet according to claim 21 wherein the power distribution system comprises a number, N, of busbars (16) used for distribution of AC power or for distribution of DC power among busbar components (39) connected through electrical contacts (38) to the busbars (16) of the power distribution system and/or used for powerline communication between busbar components (39) connected to the busbars (16) of the power distribution system ,
wherein a resistive, a capacitive or an inductive power consuming load device(40) is connectable to a busbar component (39) being connected through the electrical contacts (38), busbars (16) and a current supply path (CSP) of the power supply module (1) to the power distribution system of said control cabinet to receive an electrical power supply via said busbar component (39) and/or
wherein a power generation device (40) is connectable to a busbar component (39) being connected through the electrical contacts (38), busbars (16) and a current supply path (CSP) of the power supply module (1) to the power distribution system of said control cabinet to provide electrical power for the power distribution system of said control cabinet.

## Patentansprüche

1. Stromversorgungsmodul (1) für eine rückseitige Stromversorgung eines Stromverteilungs-Sammelschienensystems, umfassend eine Anzahl, **N,** von Sammelschienen (16), welche in einem Gehäuse einer berührungsgeschützten Sammelschienenplatte (27, 28) für die Verteilung elektrischen Stroms für Sammelschienenkomponenten (39), welche mit den besagten Sammelschienen (16) verbindbar sind, angeordnet sind,
wobei das Stromversorgungsmodul (1) umfasst:
ein elektrisch isolierendes Gehäuse, welches eine Vorderseite (10) aufweist sowie eine Rückseite (15), welche seitliche Berührungsschutz-Abdeckelemente aufweist, wobei das isolierende Gehäuse dazu ausgebildet ist, mit der Rückseite (15) an einer Montageplatte (2) montiert zu werden;
mindestens einen Klemmblock (3; 6), welcher eine Anzahl, N, von Klemmkontakten (4; 7) aufweist, welche dazu eingerichtet sind, elektrische Leiter (5; 8) an den Klemmblock (3; 6) zu klemmen;
eine Anzahl, N, von elektrisch leitfähigen und berührungsgeschützten Zwischenschienen (9), welche zwischen dem mindestens einen Klemmblock (3; 6) und einer Anzahl, N, von berührungsgeschützten elektrischen Kontakten (11) vorgesehen sind, welche an der Vorderseite (10) des Stromversorgungsmoduls (1) vorgesehen sind, und welche dazu eingerichtet sind, eine elektrische Verbindung zwischen den Sammelschienen (16) des Stromverteilungs-Sammelschienensystems und den Zwischenschienen (9) des Stromversorgungsmoduls (1) herzustellen,
wobei die Zwischenschienen (9) an der Vorderseite durch die elektrisch isolierende Gehäuse-Vorderseite (10) und die seitlichen Berührungsschutz-Abdeckelemente (15) bedeckt sind.

2. Das Stromversorgungsmodul nach Anspruch 1,
wobei das Stromversorgungsmodul (1) aufweist:
einen ersten Klemmblock (3), welcher eine Anzahl, N, von Klemmkontakten (4) aufweist, welche dazu eingerichtet sind, elektrische Leiter (5) an den ersten Klemmblock (3) zu klemmen; und
einen zweiten Klemmblock (6), welcher eine Anzahl, N, von Klemmkontakten (7) aufweist, welche dazu eingerichtet sind, elektrische Leiter (8) an den zweiten Klemmblock (6) zu klemmen,
wobei die Zwischenschienen (9) zwischen dem ersten Klemmblock (3) und dem zweiten Klemmblock (6) vorgesehen sind, um eine elektrische Verbindung zwischen den an Klemmkontakten (4) des ersten Klemmblocks (3) geklemmten elektrischen Leitern (5) und den an die Klemmkontakte (7) des zweiten Klemmblocks (6) des Stromversorgungsmoduls (1) geklemmten elektrischen Leitern (8) bereitzustellen.

3. Das Stromversorgungsmodul nach Anspruch 1 oder 2, wobei der berührungsgeschützte vorderseitige elektrische Kontakt (11) einen elektrischen, lyra- oder U-förmigen Kontakt aufweist, welcher einen Basis-Kontaktabschnitt (12) aufweist, welcher zwei gegenüberliegende Schenkel-Kontaktabschnitte (13, 14) des lyra- oder U-förmigen Kontakts 811) verbindet.

4. Das Stromversorgungsmodul nach Anspruch 3, wobei der Basis-Kontaktabschnitt (12) des elektrischen, lyra- oder U-förmigen Kontakts (11) elektrisch mit einer zugehörigen Zwischenschiene (9) des Stromversorgungsmoduls (1) verbunden ist.

5. Das Stromversorgungsmodul nach Anspruch 3 oder 4, wobei die beiden Schenkelabschnitte (13, 14) des elektrischen, lyra- oder U-förmigen Kontakts (11) durch elektrisch isolierende Kontaktabdeckabschnitte (57, 58) einer elektrisch isolierenden Gehäusevorderseite (10) berührungsgeschützt sind, welche dazu eingerichtet ist, die unter der Gehäusevorderseite (10) liegenden, zugehörigen Zwischenschienen (9) zu bedecken.

6. Das Stromversorgungsmodul nach Anspruch 5, wobei ein Abschnitt einer Sammelschiene (16) des Stromverteilungs-Sammelschienensystems zwischen den elektrischen Kontaktoberflächen der beiden Schenkel-Kontaktabschnitte (13, 14) des elektrischen, lyra- oder U-förmigen Kontakts (11) einsteckbar ist, um über den elektrischen, lyra- oder U-förmigen Kontakt (11) eine elektrische Verbindung zwischen der Sammelschiene (16) des Stromverteilungs-Sammelschienensystems und einer Zwischenschiene (9) des Stromversorgungsmoduls (1) herzustellen.

7. Das Stromversorgungsmodul nach Anspruch 6, wobei die beiden Schenkel-Kontaktabschnitte (13, 14) des elektrischen, lyra- oder U-förmigen Kontakts (11), welche einander zugewandt sind und welche einen Abschnitt einer Sammelschiene (16) des Stromverteilungs-Sammelschienensystems umgreifen, in Reaktion auf einen elektrischen Überstrom, welcher durch den elektrischen, lyra- oder U-förmigen Kontakt (11) fließt, voneinander angezogen und gegen den umgriffenen Abschnitt der Sammelschiene (16) gepresst werden, um eine Loslösung der Sammelschiene (16) von dem elektrischen, lyra- oder U-förmigen Kontakt (11) des Stromversorgungsmoduls zu verhindern und um das Erzeugen eines Lichtbogens zu verhindern.

8. Das Stromversorgungsmodul nach einem der vorangehenden Ansprüche, wobei die Sammelschiene (16) des Stromverteilungssystems ein U-förmiges Profil mit zwei gegenüberliegenden Sammelschienen-Seitenwänden (17, 18) aufweist, welche über einen Sammelschienen-Basisabschnitt (19) der Sammelschiene (16) miteinander verbunden sind,
wobei eine Seitenwand der U-förmigen Sammelschiene (16) zwischen den elektrischen Kontaktoberflächen der beiden Schenkel-Kontaktabschnitte (13, 14) des entsprechenden elektrischen, lyra- oder U-förmigen Kontakts (11) einsteckbar ist, um über den elektrischen lyra- oder U-förmigen Kontakt (11) eine elektrische Verbindung zwischen der U-förmigen Sammelschiene (16) und der Zwischenschiene (9) herzustellen.

9. Das Stromversorgungsmodul nach Anspruch 8, wobei der Sammelschienen-Basisabschnitt (19) der U-förmigen Sammelschiene (16) des Stromverteilungs-Sammelschienensystems Kontaktschlitze (16A) aufweist, welche dazu eingerichtet sind, vorstehende elektrische Kontakte (38) von Sammelschienenkomponenten (39) zu empfangen, welche in die Kontaktschlitze (20) des Sammelschienen-Basisabschnitts (19) der U-förmigen Sammelschiene (16) einsteckbar sind.

10. Das Stromversorgungsmodul nach einem der vorangehenden Ansprüche 1 bis 9, wobei der mindestens eine Klemmblock (3; 6) des Stromversorgungsmoduls (1) durch zugehörige entfernbare oder bewegliche Berührungsschutz-Abdeckelemente (45, 46) berührungsgeschützt ist, wobei das entfernbare oder bewegliche Berührungsschutz-Abdeckelement (45, 46) des mindestens einen Klemmblocks durch ein Dichtelement (48) oder ein Sperrelement (49) gegen unbeabsichtigtes Entfernen des Berührungsschutz-Abdeckelements (45; 46) durch einen Nutzer geschützt ist.

11. Das Stromversorgungsmodul nach einem der vorangehenden Ansprüche 1 bis 10, wobei die Klemmkontakte (4, 7) des mindestens einen Klemmblocks (3, 6) Prismenklemmkontakte oder Rahmenklemmkontakte aufweisen oder ein Schraubsystem für Kabelschuhe aufweisen.

12. Das Stromversorgungsmodul nach einem der Ansprüche 2 bis 11, wobei die Klemmkontakte (7) des zwischen Klemmblocks (6) des Stromversorgungsmoduls (1) eine Durchschleif-Funktion bereitstellen, um die elektrischen Leiter (5), welche an die Klemmkontakte (4) des ersten Klemmblocks (3) des Stromversorgungsmoduls (1) geklemmt sind, über Zwischenleiter (8) an Klemmkontakte eines Klemmblocks (20) eines Erweiterungs-Stromversorgungsmoduls (21) durchzuschleifen, welches für eine rückseitige Stromversorgung weiterer Sammelschienen (16) des Stromverteilungssystems vorgesehen ist.

13. Das Stromversorgungsmodul nach einem der vorangehenden Ansprüche 1 bis 12, wobei die Sammelschienenplatte (27) mit den integrierten Sammelschienen (16) des Stromverteilungssystems auf dem Stromversorgungsmodul (1) und auf einem zugehörigen Hilfs-Stützmodul (25) montiert ist, wobei das Stromversorgungsmodul (1) und das zugehörige Hilfsmodul (25) dazu verwendet werden, mechanische Unterstützung für die montierte Sammelschienenplatte (27) bereitzustellen und dazu eingerichtet sind, eine mechanische Toleranzenkompensation für hergestellte Schraublöcher an der Montageplatte (2) des Stromversorgungsmoduls (1) und des zugehörigen Hilfs-Stützmoduls (25) bereitzustellen.

14. Das Stromversorgungsmodul nach einem der vorangehenden Ansprüche 1 bis 13, wobei das Stromversorgungsmodul (1), ein zugehöriges Erweiterungs-Stromversorgungsmodul (21) und ein zugehöriges Hilfsmodul (25, 26) auf einer Montageplattform (2; 30) eines Schaltschranks montiert sind,
wobei die Montageplattform des Schaltschranks eine Montageplatte (2) aufweist, an welcher das Stromversorgungsmodul (1), das zugehörige Erweiterungs-Stromversorgungsmodul (21) und die Hilfsmodule (25, 26) mittels Befestigungsschrauben (59) befestigt sind oder wobei die Montageplattform ein rahmenmontiertes Sammelschienensystem (30) aufweist, welches Stützschienen (31, 32) aufweist, an welchen Sammelschienenplatten (27, 28) mittels Klammern (33-36) befestigt sind, und wobei das Stromversorgungsmodul (1) und das Erweiterungs-Stromversorgungsmodul (21) in die Rückseite der Sammelschienenplatten (27, 28) eingesteckt sind.

15. Das Stromversorgungsmodul nach einem der vorangehenden Ansprüche, wobei das Stromversorgungsmodul (1), das zugehörige Erweiterungs-Stromversorgungsmodul (21) und die zugehörigen Hilfsmodule (25, 26) integrierte Zusammenbauelemente eines Rast-Teils (53) aufweisen, welcher für einen werkzeugfreien Zusammenbau der berührungsgeschützten Sammelschienenplatte (27, 28) auf den entsprechenden Modulen (1, 21, 25, 26) verwendet wird.

16. Das Stromversorgungsmodul nach Anspruch 15, wobei das Rast-Teil (53) des Stromversorgungsmoduls (1), des zugehörigen Erweiterungs-Stromversorgungsmoduls (21) und des zugehörigen Hilfsmoduls (25, 26), welches für den werkzeugfreien Zusammenbau der berührungsgeschützten Sammelschienenplatte (27, 28) auf dem entsprechenden Modul verwendet wird, nach Entfernung eines Berührungsschutz-Abdeckelements (45, 46, 47) durch ein Werkzeug (52) erreichbar ist, welches für ein Entriegeln, von dem Zusammenbauelement, des verriegelten Rast-Teils (53), welcher an der Vorderseite innerhalb des entsprechenden Moduls (1, 21, 25, 26) integriert ist oder welcher an der Rückseite des Gehäuses der berührungsgeschützten Sammelschienenplatte (27, 28) vorgesehen ist, verwendet wird, um die berührungsgeschützte Sammelschienenplatte (27, 289 von den entsprechenden Modulen (1, 21, 25, 26) zu entfernen.

17. Das Stromversorgungsmodul nach einem der vorangehenden Ansprüche 1 bis 16, wobei ein interner elektrischer Stromversorgungspfad zwischen einem Klemmkontakt (4) des ersten Klemmblocks (3) des Stromversorgungsmoduls (1) und einer zugehörigen Sammelschiene (16) des Stromverteilungs-Sammelschienensystems über eine Zwischenschiene (9) des Stromversorgungsmoduls (1) bereitgestellt wird, wobei das Stromversorgungsmodul (1) für jeden internen Stromversorgungspfad ein Stromsensorelement (41) aufweist, welches dazu eingerichtet ist, einen elektrischen Strom zu messen, welcher durch den entsprechenden Stromversorgungspfad fließt und/oder ein Spannungssensorelement aufweist, welches dazu eingerichtet ist, eine Spannung zu messen, welche an dem entsprechenden Stromversorgungspfad angelegt ist und/oder ein Sicherungselement (44) aufweist.

18. Das Stromversorgungsmodul nach Anspruch 17, wobei der interne Stromversorgungspfad des Stromversorgungsmoduls (1) ein manuell betriebenes oder steuerbares Schaltelement (43) für das Unterbrechen des entsprechenden internen Stromversorgungspfads (CSP) des Stromversorgungsmoduls (1) aufweist, um Schutz, insbesondere Überstromschutz oder Überlastschutz, für Lasten (40) bereitzustellen, welche ihre Stromversorgung über Sammelschienenkomponenten (39) erhalten, welche mit Sammelschienen (16) des Stromverteilungs-Sammelschienensystems verbunden sind, wobei das steuerbare Schaltelement (43) einen Halbleiter-Leistungsschalter aufweist, welcher durch eine integrierte Steuereinheit (42) des Stromversorgungsmoduls (1) in Reaktion auf Sensorsignale gesteuert wird, die durch Sensorelemente (41) des Stromversorgungsmoduls (1) erzeugt werden und/oder ein elektromechanisches Schaltelement aufweist.

19. Das Stromversorgungsmodul nach einem der vorangehenden Ansprüche 1 bis 18, wobei eine Sammelschienenplatte (27; 28) auf dem Stromversorgungsmodul (1) manuell montierbar ist, ohne ein Werkzeug zu verwenden, und von dem Stromversorgungsmodul (1) mittels eines manuell betätigten Werkezugs (52) entfernbar ist, welches dazu eingerichtet ist, mechanisch ausgelöste Zusammenbauelemente eines Rast-Teils (53) zu lösen, welches an der Vorderseite des Gehäuses des entsprechenden Moduls integriert ist.

20. Das Stromversorgungsmodul nach einem der vorangehenden Ansprüche 1 bis 19, wobei das Stromversorgungsmodul (1) auf der Montageplattform um 180° um die Z-Achse drehbar ist, sodass dessen Klemmblock einer externen Stromversorgung zugeordnet ist.

21. Ein Schaltschrank, umfassend eine Montageplattform zur Montage mindestens eines Stromversorgungsmoduls (1) gemäß einem der vorangehenden Ansprüche 1 bis 20, welches zur rückseitigen Stromversorgung, durch ein Stromverteilungs-Sammelschienensystem des Schaltschranks, eines stromverbrauchenden Lastgeräts (40) durch Sammelschienenkomponenten (39) verwendet wird, welche an einer Vorderseite des Schaltschranks vorgesehen sind.

22. Der Schaltschrank nach Anspruch 21, wobei das Stromverteilungs-Sammelschienensystem eine Anzahl, N, von Sammelschienen (16) aufweist, welche für die Verteilung von Wechselstrom oder die Verteilung von Gleichstrom zwischen Sammelschienenkomponenten (39) verwendet werden, welche über elektrische Kontakte (38) mit den Sammelschienen (16) des Stromverteilungssystems verbunden sind und/oder welche für eine Powerline-Kommunikation zwischen Sammelschienenkomponenten (39), die mit den Sammelschienen (16) des Stromverteilungssystems verbunden sind, verwendet werden,
wobei ein resistives, ein kapazitives oder ein induktives stromverbrauchendes Lastgerät (40) mit einer Sammelschienenkomponente (39) verbindbar ist, welche über die elektrischen Kontakte (38), Sammelschienen (16) und einen Stromversorgungspfad (CSP) des Stromversorgungsmoduls (1) mit dem Stromverteilungssystem des Schaltschranks verbunden ist, um über die Sammelschienenkomponente (39) elektrische Stromversorgung zu erhalten und/oder
wobei ein Stromerzeugungsgerät (40)mit einer Sammelschienenkomponente (39) verbindbar ist, welche über die elektrischen Kontakte (38), Sammelschienen (16) und einen Stromversorgungspfad (CSP) des Stromversorgungsmoduls (1) mit dem Stromverteilungssystem des Schaltschranks verbunden ist, um dem Stromverteilungssystem des Schaltschranks elektrischen Strom bereitzustellen.

## Revendications

1. Module d'alimentation électrique (1) pour l'alimentation électrique côté arrière d'un système de barre omnibus de distribution d'énergie comprenant un nombre, N, de barres omnibus (16) intégrées dans un boîtier d'une carte de barre omnibus (27, 28) à protection tactile pour la distribution d'énergie électrique à des composants (39) de barre omnibus pouvant être connectés auxdites barres omnibus (16),
ledit module d'alimentation électrique (1) comprenant :
un boîtier d'isolation électrique comprenant un côté avant (10) et un côté arrière (15) comprenant des éléments latéraux de couvercle de protection tactile, dans lequel le boîtier d'isolation est conçu pour être monté avec ledit côté arrière (15) sur une plaque de montage (2) ;
au moins un bloc de serrage (3 ; 6) comportant un nombre, N, de contacts de serrage (4 ; 7) adaptés pour serrer des conducteurs électriques (5 ; 8) sur ledit bloc de serrage (3 ; 6) ;
un nombre, N, de barres intermédiaires (9) électriquement conductrices et à protection tactile prévues entre l'au moins un bloc de serrage (3 ; 6) et un nombre, N, de contacts électriques à protection tactile (11) prévus au niveau du côté avant (10) dudit module d'alimentation électrique (1) et adaptés pour établir une connexion électrique entre les barres omnibus (16) dudit système de barres omnibus de distribution d'énergie et les barres intermédiaires (9) dudit module d'alimentation électrique (1),
dans lequel les barres intermédiaires (9) sont couvertes sur le côté avant par le côté avant de boîtier d'isolation électrique (10) et par les éléments latéraux de couvercle de protection tactile.

2. Module d'alimentation électrique selon la revendication 1, dans lequel le module d'alimentation électrique (1) comprend : un premier bloc de serrage (3) comportant un nombre, N, de contacts de serrage (4) adaptés pour serrer des conducteurs électriques (5) sur ledit premier bloc de serrage (3) ; et un second bloc de serrage (6) comportant un nombre, N, de contacts de serrage (7) adaptés pour serrer des conducteurs électriques (8) sur ledit second bloc de serrage (6), dans lequel les barres intermédiaires (9) sont prévues entre ledit premier bloc de serrage (3) et ledit second bloc de serrage (6) pour fournir une connexion électrique entre les conducteurs électriques (5) serrés sur des contacts de serrage (4) du premier bloc de serrage (3) et les conducteurs électriques (8) serrés sur les contacts de serrage (7) du second bloc de serrage (6) dudit module d'alimentation électrique (1).

3. Module d'alimentation électrique selon la revendication 1 ou 2, dans lequel le contact électrique latéral avant à protection tactile (11) comprend contact électrique en forme de lyre ou de U comportant une partie de contact de base (12) connectant deux parties de contact de jambe opposées (13, 14) dudit contact électrique en forme de lyre ou de U (11).

4. Module d'alimentation électrique selon la revendication 3, dans lequel la partie de contact de base (12) du contact électrique en forme de lyre ou de U (11) est électriquement connectée à une barre intermédiaire associée (9) dudit module d'alimentation électrique (1).

5. Module d'alimentation électrique selon la revendication 3 ou 4, dans lequel les deux parties de contact de jambe (13, 14) du contact électrique en forme de lyre ou de U (11) sont à protection tactile par des parties de couvercle de contact électriquement isolantes (57, 58) d'un côté avant de boîtier électriquement isolant (10) adaptées pour couvrir les barres intermédiaires associées (9) se trouvant sous le côté avant du boîtier (10).

6. Module d'alimentation électrique selon la revendication 5, dans lequel une partie d'une barre omnibus (16) du système de barre omnibus de distribution d'énergie peut être enfichée entre les surfaces de contact électrique des deux parties de contact de jambe (13, 14) du contact électrique en forme de lyre ou de U (11) pour établir une connexion électrique entre la barre omnibus (16) du système de barre omnibus de distribution d'énergie et une barre intermédiaire (9) dudit module d'alimentation électrique (1) à travers ledit contact électrique en forme de lyre ou de U (11).

7. Module d'alimentation électrique selon la revendication 6, dans lequel les deux parties de contact de jambe (13, 14) de la lyre électrique ou du contact en forme de U (11) se faisant face et englobant une partie d'une barre omnibus (16) dudit système de barre omnibus de distribution d'énergie sont attirées l'une vers l'autre en réponse à une surintensité électrique s'écoulant à travers le contact électrique en forme de lyre ou de U (11) et sont pressées contre la partie englobée de la barre omnibus (16) pour empêcher une séparation de la barre omnibus (16) du contact électrique en forme de lyre ou de U (11) du module d'alimentation électrique (1) et pour empêcher la génération d'un arc électrique.

8. Module d'alimentation électrique selon les revendications précédentes, dans lequel la barre omnibus (16) du système de distribution électrique comporte un profil en forme de U avec deux parois latérales de barre omnibus opposées (17, 18) connectées par une partie de base de barre omnibus (19) de la barre omnibus (16),
dans lequel une paroi latérale de ladite barre omnibus en forme de U (16) peut être enfichée entre les surfaces de contact électrique des deux parties de contact de jambe (13, 14) du contact électrique en forme de lyre ou de U respectif (11) pour établir une connexion électrique entre la barre omnibus en forme de U (16) et la barre intermédiaire (9) à travers le contact électrique en forme de lyre ou de U (11).

9. Module d'alimentation électrique selon la revendication 8, dans lequel la partie de base de barre omnibus (19) de la barre omnibus en forme de U (16) dudit système de barre omnibus de distribution d'énergie comprend des fentes de contact (16A) adaptées pour recevoir des contacts (38) électriques saillants de composants (39) de barre omnibus pouvant être enfichés dans les fentes de contact (20) de la partie de base de barre omnibus (19) de ladite barre omnibus en forme de U (16).

10. Module d'alimentation électrique selon l'une quelconque des revendications précédentes 1 à 9, dans lequel l'au moins un bloc de serrage (3 ; 6) du module d'alimentation électrique (1) est à protection tactile par des éléments de couvercle de protection tactile (45 ; 46) amovibles ou mobiles associés, dans lequel l'élément de couvercle de protection tactile (45 ; 46) amovible ou mobile de l'au moins un bloc de serrage (3 ; 6) est fixé par un élément d'étanchéité (48) ou par un élément de verrouillage (49) contre un retrait involontaire de l'élément de couvercle de protection tactile (45 ; 46) par un utilisateur.

11. Module d'alimentation électrique selon l'une quelconque des revendications précédentes 1 à 10, dans lequel les contacts de serrage (4, 7) de l'au moins un bloc de serrage (3, 6) comprennent des contacts de serrage de prisme ou des contacts de borne de boîtier ou comprennent un système de vis pour des cosses de câble.

12. Module d'alimentation électrique selon l'une quelconque des revendications précédentes 2 à 11, dans lequel les contacts de serrage (7) du second bloc de serrage (6) dudit module d'alimentation électrique (1) fournissent une fonctionnalité de bouclage pour boucler les conducteurs électriques (5) serrés sur les contacts de serrage (4) du premier bloc de serrage (3) dudit module d'alimentation électrique (1) par l'intermédiaire de conducteurs intermédiaires (8) sur des contacts de serrage d'un bloc de serrage (20) d'un module d'alimentation électrique d'extension (21) prévu pour l'alimentation électrique arrière d'autres barres omnibus (16) dudit système de distribution d'énergie.

13. Assemblage comprenant une carte de barres omnibus (27) à protection tactile avec des barres omnibus (16) intégrées d'un système de distribution d'énergie, un module d'alimentation électrique (1) selon l'une quelconque des revendications précédentes 1 à 12 et un module de support auxiliaire associé (25), dans lequel la carte de barres omnibus (27) est montée sur le module d'alimentation électrique (1) et sur le module de support auxiliaire associé (25) et dans lequel le module d'alimentation électrique (1) et son module auxiliaire associé (25) sont utilisés pour fournir un support mécanique à la carte de barres omnibus (27) montée et sont adaptés pour fournir une compensation de tolérance mécanique pour des trous de vis fabriqués sur la plaque de montage (2) du module d'alimentation électrique (1) et le module de support auxiliaire associé (25).

14. Armoire de commande comprenant un module d'alimentation électrique (1) selon l'une quelconque des revendications précédentes 1 à 12, un module d'alimentation électrique d'extension associé (21) et des modules auxiliaires associés (25, 26), dans laquelle le
module d'alimentation électrique d'extension associé (21) et les modules auxiliaires associés (25, 26) sont montés sur une plateforme de montage (2 ; 30) de l'armoire de commande,
dans laquelle la plateforme de montage de l'armoire de commande comprend une plaque de montage (2) sur laquelle le module d'alimentation électrique (1), le module d'alimentation électrique d'extension associé (21) et les modules auxiliaires (25, 26) sont fixés au moyen de vis de fixation (59) ou dans laquelle la plateforme de montage comprend un système (30) de barre omnibus monté sur un cadre comportant des barres de support (31, 32) sur lesquelles des cartes de barre omnibus (27, 28) sont fixées au moyen de supports (33 à 36) et dans lequel le module d'alimentation électrique (1) et le module d'alimentation électrique d'extension (21) sont enfichés sur le côté arrière des cartes de barre omnibus (27, 28).

15. Armoire de commande selon la revendication 14, dans laquelle le module d'alimentation électrique (1), le module d'alimentation électrique d'extension associé (21) et les modules auxiliaires associés (25, 26) comprennent des éléments d'assemblage intégrés d'une partie de verrouillage (53) utilisée pour un assemblage sans outil de la carte de barre omnibus (27, 28) à protection tactile sur les modules respectifs (1, 21, 25, 26).

16. Armoire de commande selon la revendication 15, dans laquelle la
partie de verrouillage (53) du module d'alimentation électrique (1), du module d'alimentation électrique d'extension associé (21) et des modules auxiliaires associés (25, 26) utilisés pour un assemblage sans outil de la carte de barre omnibus (27, 28) à protection tactile sur le module respectif est après le retrait d'un élément de couvercle de protection tactile (45, 46, 47) accessible par un outil (52) utilisé pour libérer la partie de verrouillage en prise (53) intégrée sur le côté avant à l'intérieur des modules respectifs (1, 21, 25, 26) ou prévue sur le côté arrière du boîtier de la carte de barre omnibus (27, 28) à protection tactile de l'élément d'assemblage pour le retrait de la carte de barre omnibus (27, 28) à protection tactile des modules respectifs (1, 21, 25, 26).

17. Module d'alimentation électrique selon les revendications précédentes 1 à 12
dans lequel un chemin d'alimentation en courant électrique interne est prévu entre un contact de serrage (4) du premier bloc de serrage (3) du module d'alimentation électrique (1) et une barre omnibus (16) associée du système de barre omnibus de distribution d'énergie à travers une barre intermédiaire (9) dudit module d'alimentation électrique (1), dans lequel le module d'alimentation électrique (1) comprend pour chaque chemin d'alimentation en courant interne un élément de capteur de courant (41) adapté pour mesurer un courant électrique circulant à travers le chemin d'alimentation en courant respectif et/ou comprend un élément de capteur de tension adapté pour mesurer une tension appliquée au chemin d'alimentation en courant respectif et/ou comprend un élément de fusible (44).

18. Module d'alimentation électrique selon la revendication 17, dans lequel le trajet d'alimentation en courant interne du module d'alimentation électrique (1) comprend un élément de commutation (43) actionné ou pouvant être commandé manuellement pour l'interruption du trajet d'alimentation en courant interne respectif (CSP) du module d'alimentation électrique (1) pour fournir une protection, en particulier une protection contre les surintensités ou une protection contre les surcharges, à des charges (40) recevant leur alimentation électrique par l'intermédiaire de composants (39) de barres omnibus connectés à des barres omnibus (16) du système de barres omnibus de distribution d'énergie, dans lequel l'élément de commutation pouvant être commandé (43) comprend un commutateur de puissance à semi-conducteur commandé par une unité de commande intégrée (42) dudit module d'alimentation électrique (1) en réponse à des signaux de capteur générés par des éléments de capteur (41) du module d'alimentation électrique (1) et/ou comprend un élément de commutation électromécanique.

19. Module d'alimentation électrique selon l'une quelconque des revendications précédentes 1 à 12, 17 ou 18
dans lequel une carte de barre omnibus (27, 28) peut être montée manuellement sur le module d'alimentation électrique (1) sans utiliser d'outil et peut être retirée du module d'alimentation électrique (1) au moyen d'un outil actionné manuellement (52) adapté pour libérer des éléments d'assemblage à ressort mécanique d'une partie de verrouillage (53) intégrée et accessible au niveau du côté avant du boîtier du module respectif.

20. Module d'alimentation électrique selon l'une quelconque des revendications précédentes 1 à 12 ou 17 à 19
dans lequel le module d'alimentation électrique (1) peut tourner le long de l'axe z de 180 degrés sur la plateforme de montage de sorte que son bloc de serrage fait face à une alimentation électrique externe.

21. Armoire de commande comprenant une plateforme de montage pour le montage d'au moins un module d'alimentation électrique (1) selon l'une quelconque des revendications précédentes 1 à 12 ou 17 à 20, utilisée pour une alimentation électrique côté arrière de dispositifs de charge (40) consommateurs d'énergie à travers de composants (39) de barre omnibus fournis au niveau d'un côté avant de l'armoire de commande par un système de barre omnibus de distribution d'énergie de ladite armoire de commande.

22. Armoire de commande selon la revendication 21, dans laquelle le système de distribution d'énergie comprend un nombre, N, de barres omnibus (16) utilisées pour la distribution d'énergie CA ou pour la distribution d'énergie CC entre des composants (39) de barre omnibus connectés par l'intermédiaire de contacts (38) électriques aux barres omnibus (16) du système de distribution d'énergie et/ou utilisées pour la communication par ligne électrique entre des composants (39) de barre omnibus connectés aux barres omnibus (16) du système de distribution d'énergie,
dans lequel un dispositif de charge (40) consommateur d'énergie résistif, capacitif ou inductif peut être connecté à un composant (39) de barre omnibus étant connecté à travers les contacts (38) électriques, les barres omnibus (16) et un chemin d'alimentation en courant (CSP) du module d'alimentation électrique (1) au système de distribution **d'énergie** de ladite armoire de commande pour recevoir une alimentation électrique par l'intermédiaire dudit composant (39) de barre omnibus et/ou
dans lequel un dispositif de génération d'énergie (40) peut être connecté à un composant (39) de barre omnibus connecté à travers les contacts (38) électriques, les barres omnibus (16) et un chemin d'alimentation en courant (CSP) du module d'alimentation électrique (1) au système de distribution **d'énergie** de ladite armoire de commande pour fournir de l'énergie électrique au système de distribution d'énergie de ladite armoire de commande.
